# EUROPÄISCHE PATENTSCHRIFT

(11) **EP 2 285 844 B1**
(45) Veröffentlichungstag und Bekanntmachung des Hinweises auf die Patenterteilung: **15.01.2014**
(21) Anmeldenummer: 09741990.7
(22) Anmeldetag: 24.04.2009
(51) Int. Cl.: C08L 51/00, C08L 51/08, C09D 151/00, C09D 137/00, C09D 139/00, D06M 13/355

(54) **POLYMERISIERBARE ZUSAMMENSETZUNG**
POLYMERIZABLE COMPOSITION
COMPOSITION POLYMÉRISABLE

(30) Priorität: 09.05.2008 DE 102008023076
(43) Veröffentlichungstag der Anmeldung: 23.02.2011
(73) Patentinhaber: Henkel AG & Co. KGaA, 40589 Düsseldorf (DE)
(72) Erfinder: TADEN, Andreas, 40597 Düsseldorf (DE); KREILING, Stefan, 40597 Düsseldorf (DE); SCHÖNFELD, Rainer, 40221 Düsseldorf (DE); UNGER, Lothar, 46049 Oberhausen (DE)
(86) Internationale Anmeldenummer: PCT/EP2009/054943
(87) Internationale Veröffentlichungsnummer: WO 2009/135772

(56) Entgegenhaltungen:
- WO-A-2008/060545
- WO-A-2008/076244
- US-A1- 2002 007 022
- US-A1- 2007 129 509

## Beschreibung

Die vorliegende Erfindung betrifft eine polymerisierbare Zusammensetzung, enthaltend mindestens eine polymerisierbare Benzoxazin-Verbindung und Kern-Schale-Partikel, wobei der Kern der Kern-Schale-Partikel mindestens ein (Co)polymer mindestens eines ethylenisch ungesättigten Monomers (A) enthält und die Schale der Kern-Schale-Partikel mindestens ein vernetztes (Co)polymer mindestens eines ethylenisch ungesättigten Monomers (B) enthält, wobei das ethylenisch ungesättigte Monomer (B) mindestens eine aromatische Gruppe umfasst. Weitere Gegenstände der vorliegenden Erfindung sind Klebstoffe, Dichtstoffe oder Beschichtungen, welche die erfindungsgemäße polymerisierbare Zusammensetzung umfassen, sowie die Polymerisationsprodukte der genannten Zusammensetzung. Weiterhin betrifft die vorliegende Erfindung ein Verfahren zur Herstellung der erfindungsgemäßen polymerisierbaren Zusammensetzung.

Epoxid-basierte Harzsysteme werden seit langem erfolgreich in der Luftfahrt-, Automobil- oder Elektroindustrie als Klebstoffe, Dichtstoffe oder zur Beschichtung von Oberflächen benutzt oder als Harzsysteme mit einer Reihe unterschiedlicher Materialien für die Herstellung von Verbundwerkstoffen verwendet.

Benzoxazin-basierte Harzsysteme verfügen in der Regel über eine hohe Glasübergangstemperatur und zeichnen sich durch ihre guten elektrischen Eigenschaften und ihr positives Brandschutzverhalten aus.

Mischungen von Epoxidharzen und Benzoxazinharzen werden beispielsweise in den US-Patenten 4607091, 5021484 und 5200452 beschrieben. Die Mischungen der genannten Harzsysteme zeichnen sich durch ihre vorteilhafte Verarbeitbarkeit aus, da das Epoxidharz die Viskosität der Zusammensetzung entscheidend reduziert. Die genannten Harzsysteme können u.a. auf Grund der leichten Verarbeitbarkeit bei einem potentiell hohen Anteil von Füllstoffen in der elektronischen Industrie eingesetzt werden. Nachteilig ist allerdings, dass der Zusatz von Epoxidharzen die Härttemperatur der Benzoxazin-basierten Harzsysteme teilweise deutlich erhöht.

Benzoxazin-basierte Harzsysteme zeichnen sich nach der Aushärtung durch eine hohe mechanische Festigkeit aus. Als nachteilig ist anzusehen, dass die genannten Materialien in der Regel sehr spröde sind und daher für die meisten Anwendungen schlagzäh modifiziert werden müssen.

Benzoxazin-basierte Harzsysteme mit verbesserter Schlagzähmodifizierung sind ebenfalls bekannt. So beschreibt das US-Patent US 7157509 thermisch-härtbare Benzoxazin-basierte Zusammensetzungen, die Acrylnitril-Butadien-Copolymere als Zähigkeitsvermittler (toughener) umfassen, wobei das genannte Copolymer über terminale sekundäre Aminogruppen verfügt.

Weiterhin beschreibt die internationale Patentanmeldung WO 2007/064801 eine härtbare Zusammensetzung, enthaltend Benzoxazin-basierten Harzsysteme und bestimmte Addukte als Zähigkeitsvermittler (toughener). Die genannten Addukte werden in zwei Schritten hergestellt. In einem ersten Schritt erfolgt die Umsetzung einer ersten Hydroxid-haltigen Verbindung mit einer Isocyanathaltigen Verbindung und einer phenolischen Verbindung, wobei das Reaktionsprodukt in einem zweiten Schritt mit Epoxid-haltigen Verbindungen weiter umgesetzt wird, wodurch das genannte Addukt erhalten wird.

Ungeachtet des Standes der Technik besteht nach wie vor ein Bedürfnis nach neuen und vorteilhaften Zähigkeitsvermittlern für Benzoxazin-basierte Harzsysteme. Ziel der vorliegenden Erfindung war daher die Bereitstellung von polymerisierbaren Benzoxazin-basierten Zusammensetzungen mit verbesserter Schlagzähmodifizierung, enthaltend Zähigkeitsvermittler, wobei die genannten Zähigkeitsvermittler eine leichte Formulierbarkeit und gute Kompatibilität mit der Benzoxazinmatrix aufweisen.

Überraschenderweise wurde nun gefunden, dass eine Benzoxazin-basierte Zusammensetzung, umfassend bestimmte Kern-Schale-Partikel als Zähigkeitsvermittler in effektiver Weise schlagzähmodifiziert werden kann, wobei die genannten Kern-Schale-Partikel eine leichte Formulierbarkeit und gute Kompatibilität mit der Benzoxazinmatrix aufweisen.

Gegenstand der vorliegenden Erfindung ist daher eine polymerisierbare Zusammensetzung, enthaltend mindestens eine polymerisierbare Benzoxazin-Verbindung und Kern-Schale-Partikel, wobei der Kern der Kern-Schale-Partikel mindestens ein (Co)polymer mindestens eines ethylenisch ungesättigten Monomers (A) enthält und die Schale der Kern-Schale-Partikel mindestens ein vernetztes (Co)polymer mindestens eines ethylenisch ungesättigten Monomers (B) enthält, wobei das ethylenisch ungesättigte Monomer (B) mindestens eine aromatische Gruppe umfasst.

Ein weiterer Gegenstände der vorliegenden Erfindung ist ein Verfahren zur Herstellung der erfindungsgemäßen polymerisierbaren Zusammensetzung.

Die polymerisierbare Zusammensetzung der vorliegenden Erfindung eignet sich im besonderen Maße zur Herstellung von Klebstoffen, Dichtstoffen oder Beschichtungen, sowie zur Herstellung von Verbundwerkstoffen, die eine Schicht oder ein Bündel von Fasern, wie beispielsweise Kohlefasern, umfassen.

Daher sind Klebstoffe, Dichtstoffe oder Beschichtungen, die die erfindungsgemäße polymerisierbare Zusammensetzung umfassen, ebenso Gegenstand der vorliegenden Erfindung wie das Polymerisationsprodukt der erfindungsgemäßen Zusammensetzung und dessen Herstellung, wobei das genannte Polymerisationsprodukt eine Schicht oder ein Bündel von Fasern, wie beispielsweise Kohlefasern, umfasst.

Die polymerisierbare Benzoxazin-Verbindung der vorliegenden Erfindung ist ein Monomer, Oligomer oder Polymer, das zumindest eine Benzoxazingruppe umfasst. Bevorzugte Monomere können vorzugsweise bis zu vier Benzoxazingruppen umfassen, wobei sowohl einzelne Monomere als auch Mischungen von zwei oder mehr Monomeren als Benzoxazin-Verbindung verwendet werden können.

Im Folgenden sind einige erfindungsgemäße polymerisierbare Benzoxazin-Verbindungen aufgeführt, die bis zu vier Benzoxazingruppen umfassen.

Geeignete Benzoxazin-Verbindungen werden vorzugsweise durch Formel (B-I) beschrieben, 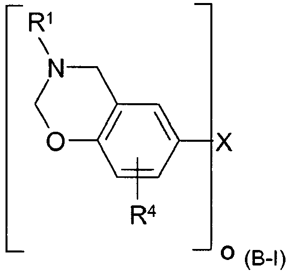 wobei o eine ganze Zahl zwischen 1 und 4 ist, X ausgewählt wird aus der Gruppe bestehend aus Alkyl (für o = 1), Alkylen (für o = 2 bis 4), Sauerstoff (für o = 2), Thiol (für o = 1), Schwefel (für o = 2), Sulfoxid (für o = 2), Sulfon (für o = 2) und einer direkten, kovalenten Bindung (für o = 2), R¹ ausgewählt wird aus der Gruppe bestehend aus Wasserstoff, Alkyl, Alkenyl und Aryl und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Besonders bevorzugte Strukturen gemäß Formel (B-I)werden durch Formel (B-II) repräsentiert, 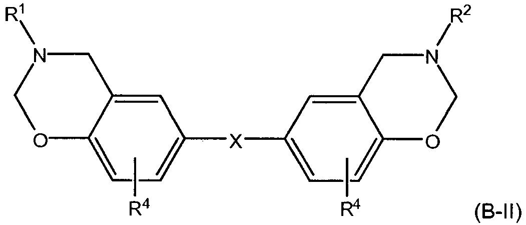 wobei X ausgewählt wird aus der Gruppe bestehend aus CH₂, C(CH₃)₂, O, C=O, S, S=O, O=S=O und einer direkten, kovalenten Bindung, R¹ und R² gleich oder verschieden sind und jeweils ausgewählt werden aus einer Gruppe bestehend aus Wasserstoff, Alkyl, insbesondere Methyl, Ethyl, n-Propyl, i-Propyl, n-Butyl oder i-Butyl, Alkenyl, insbesondere Allyl, und Aryl und die Substituenten R⁴ gleich oder verschieden sind und jeweils ausgewählt werden aus der Gruppe bestehend aus Wasserstoff, Halogen, Alkyl und Alkenyl, oder R⁴ jeweils ein divalenter Rest ist, der aus der Benzoxazin-Struktur eine entsprechende Naphthoxazin-Struktur macht.

Erfindungsgemäße Benzoxazin-Verbindungen gemäß Formel (B-II) sind beispielsweise Benzoxazine gemäß Formel (B-III) bis (B-VI), 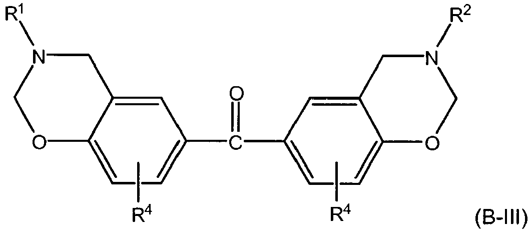 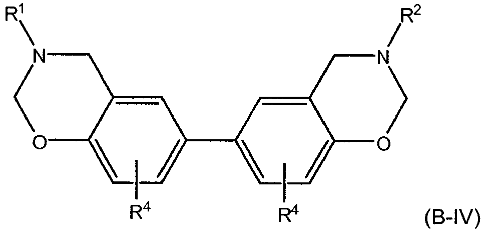 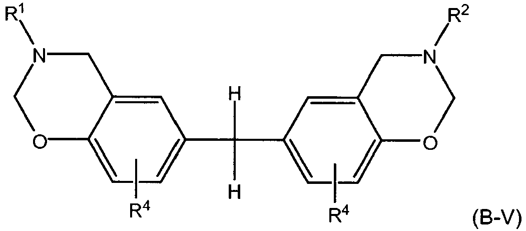 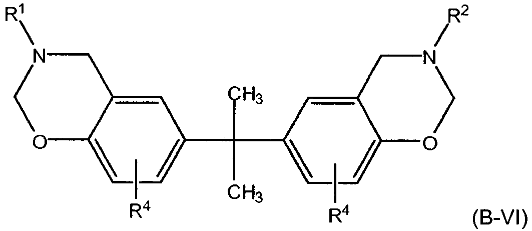 wobei R¹ R² und R⁴ wie oben definiert sind.

Erfindungsgemäße Benzoxazin-Verbindungen sind weiterhin Verbindungen der allgemeinen Formel (B-VII), 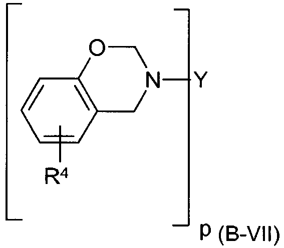 wobei p = 2 ist und Y ausgewählt wird aus der Gruppe bestehend aus Biphenyl (für p = 2), Diphenylmethan (für p = 2), Diphenylisopropan (für p = 2), Diphenylsulfid (für p = 2), Diphenylsulfoxid (für p = 2), Diphenylsulfon (für p = 2), Diphenylketon (für p = 2) und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Erfindungsgemäße Benzoxazin-Verbindungen sind weiterhin Verbindungen der allgemeinen Formel (B-VIII) bis (B-X), 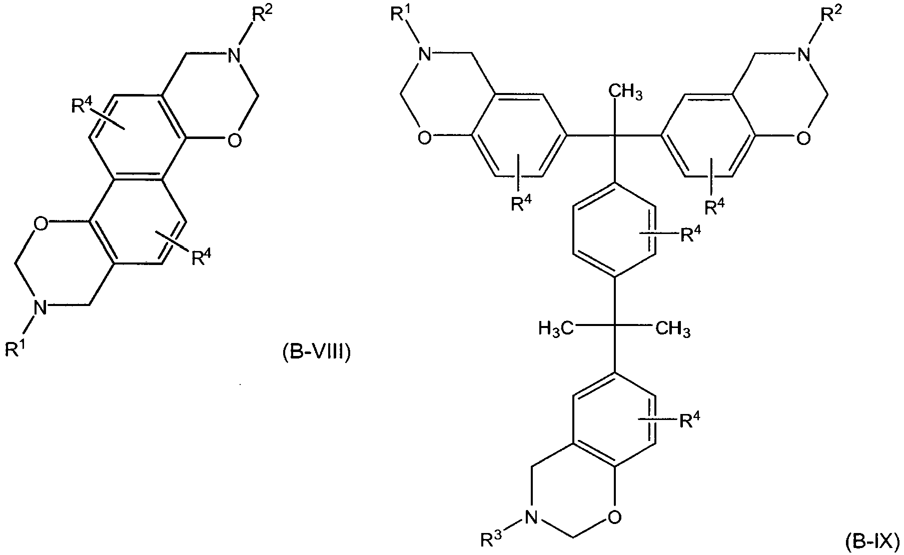 wobei R¹, R² und R⁴ wie oben definiert sind und R³ wie R¹ oder R² definiert ist.

Geeignete Benzoxazin-Verbindungen im Sinne der vorliegenden Erfindung sind beispielsweise die folgenden Verbindungen:

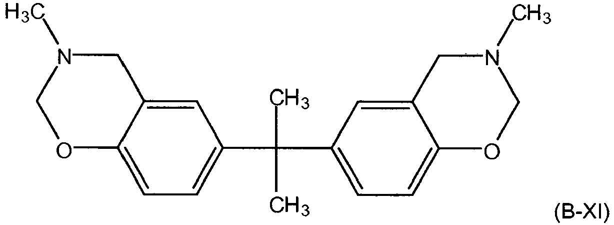

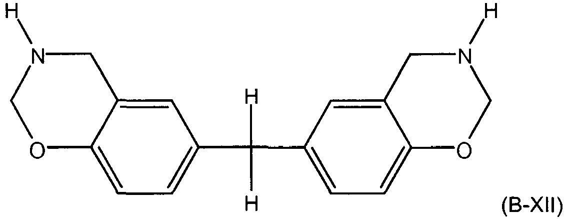

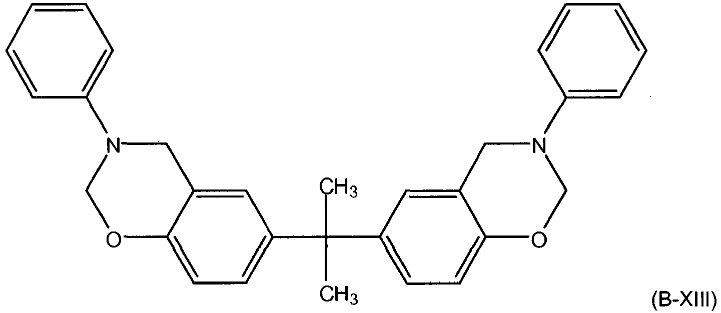

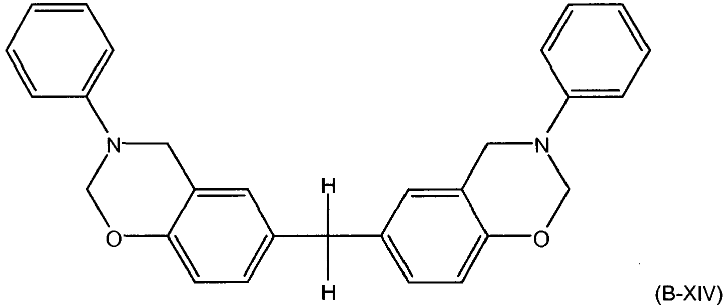

Geeignete Benzoxazin-Verbindungen im Sinne der vorliegenden Erfindung sind sowohl monofunktionelle als auch multifunktionelle Benzoxazin-Verbindungen. Unter monofunktionellen Benzoxazin-Verbindungen sind solche Verbindungen zu verstehen, die nur eine Benzoxazingruppe umfassen, während multifunktionelle Benzoxazin-Verbindungen mehr als eine Benzoxazingruppe umfassen und vorzugsweise bis zur vier Benzoxazingruppen enthalten können.

Beispielhaft können monofunktionelle Benzoxazin-Verbindungen durch die allgemeine Formel (XIX) beschrieben werden, 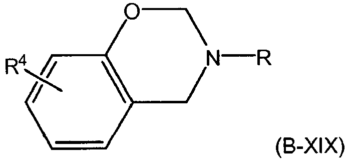 wobei R ausgewählt wird aus der Gruppe bestehend aus Alkyl, insbesondere Methyl, Ethyl, n-Propyl, i-Propyl, n-Butyl, i-Butyl, Alkenyl, insbesondere Allyl, und Aryl, wobei jede der genannten Gruppen gegebenenfalls substituiert ist und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Bevorzugte monofunktionelle Benzoxazin-Verbindungen werden beispielsweise durch die allgemeine Formel (B-XX) beschrieben, 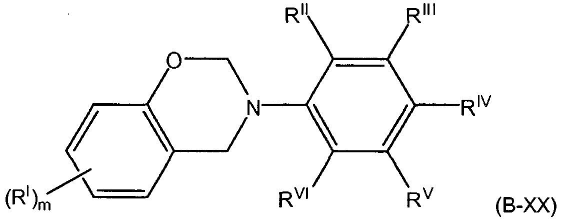 wobei R¹ ausgewählt wird aus der Gruppe bestehend aus Alkyl und Alkenyl, wobei jede der genannten Reste gegebenenfalls substituiert oder unterbrochen ist von einem oder mehreren O, N, S, C=O, COO oder NHC=O oder einer oder mehrerer Arylgruppen, m eine ganze Zahl zwischen 0 und 4 ist und R", R^{III}, R^{IV}, R^{V} und R^{VI} unabhängig voneinander ausgewählt werden aus der Gruppe bestehend aus Wasserstoff, Alkyl und Alkenyl, wobei jede Alkyl- oder Alkenylgruppe gegebenenfalls substituiert oder unterbrochen ist von einem oder mehreren O, N, S, C=O, COO, oder NHC=O oder einer oder mehrerer Arylgruppen. Geeignete monofunktionelle Benzoxazin-Verbindungen im Sinne der vorliegenden Erfindung sind beispielsweise die folgenden Verbindungen (B-XXI) und (B-XXII), 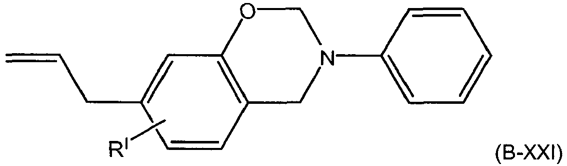 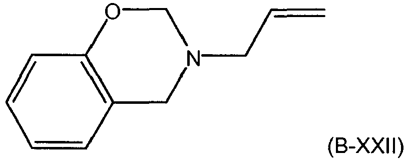 wobei R¹ wie oben definiert ist.

In einer besonders bevorzugten Ausführungsform der Erfindung wird die Benzoxazin-Verbindung ausgewählt aus N-Alkyl- oder N-Alkenyl-Benzoxazin-Verbindungen oder aus deren Mischungen. Unter N-Alkyl- oder N-Alkenyl-Benzoxazin-Verbindungen werden im Sinne der vorliegenden Erfindung solche Verbindungen verstanden, die mindestens eine Benzoxazingruppe, vorzugsweise zwei Benzoxazingruppen umfassen und in denen das N-Atom des Oxazinrings mindestens einer, vorzugsweise jeder Benzoxazingruppe einen Alkyl- bzw. Alkenylrest trägt.

N-Alkyl- oder N-Alkenyl-Benzoxazin-Verbindungen sind besonders bevorzugt, da die erfindungsgemäßen Kern-Schale-Partikel eine besonders leichte Formulierbarkeit und gute Kompatibilität mit den genannten Benzoxazin-Verbindungen aufweisen.

Die erfindungsgemäßen Kern-Schale-Partikel liegen in den Polymerisationsprodukten, insbesondere der N-Alkyl- oder N-Alkenyl-Benzoxazin-Verbindungen im Wesentlichen homogen verteilt vor und zeigen eine sehr geringe Koagulationstendenz. Auf diese Weise wird eine besonders effektive Schlagzähmodifizierung der genannten Benzoxazine erreicht.

Besonders bevorzugte N-Alkyl- oder N-Alkenyl-Benzoxazin-Verbindungen werden vorzugsweise durch Formel (B-XXIII) beschrieben, 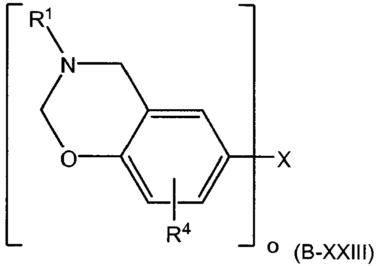 wobei o eine ganze Zahl zwischen 1 und 4 ist, X ausgewählt wird aus der Gruppe bestehend aus Alkyl (für o = 1), Alkylen (für o = 2 bis 4), Thiol (für o = 1), Thioether (für o = 2), Sulfoxid (für o = 2), Sulfon (für o = 2) und einer direkten, kovalenten Bindung (für o = 2), R¹ ausgewählt wird aus der Gruppe bestehend aus Alkyl und Alkenyl und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Besonders bevorzugte Strukturen gemäß Formel (B-XXIII) werden durch Formel (B-XXIV) und (B-XXV) repräsentiert, 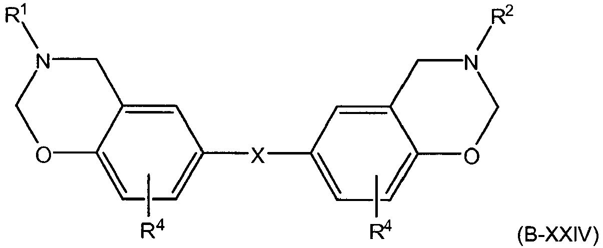 wobei X ausgewählt wird aus der Gruppe bestehend aus CH₂, C(CH₃)₂, C=O, S, S=O, O=S=O und einer direkten, kovalenten Bindung, R¹ und R² gleich oder verschieden sind und jeweils ausgewählt werden aus einer Gruppe bestehend aus Alkyl, insbesondere Methyl, Ethyl, n-Propyl, i-Propyl, n-Butyl oder i-Butyl und Alkenyl, insbesondere Allyl und die Substituenten R⁴ gleich oder verschieden sind und jeweils ausgewählt werden aus der Gruppe bestehend aus Wasserstoff, Halogen, Alkyl und Alkenyl, oder R⁴ jeweils ein divalenter Rest ist, der aus der Benzoxazin-Struktur eine entsprechende Naphthoxazin-Struktur macht; 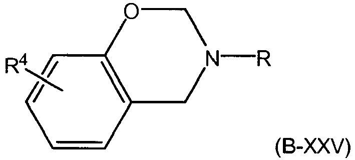 und wobei R ausgewählt wird aus der Gruppe bestehend aus Alkyl, insbesondere Methyl, Ethyl, n-Propyl, i-Propyl, n-Butyl, i-Butyl und Alkenyl, insbesondere Allyl, wobei jede der genannten Gruppen gegebenenfalls substituiert ist und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Benzoxazin-Verbindungen im Sinne der vorliegenden Erfindung sind kommerziell erhältlich und werden u.a. von Huntsman Advanced Materials; Georgia-Pacific Resins, Inc. und Shikoku Chemicals Corporation, Chiba, Japan vertrieben.

Ungeachtet dessen können die erfindungsgemäßen Benzoxazin-Verbindungen der vorliegenden Erfindung auch durch Umsetzung einer phenolischen Verbindung, etwa Bisphenol A, Bisphenol F, Bisphenol S oder Thiophenol mit einem Aldehyd, etwa Formaldehyd, in Gegenwart eines primären Alkyl-oder Arylamins erhalten werden.

Geeignete Herstellverfahren werden beispielsweise im US-Patent 5543516, insbesondere in den Beispielen 1 bis 19 in den Spalten 10 bis 14 offenbart, wobei die Reaktionszeit der entsprechenden Umsetzung je nach Konzentration, Reaktivität und Reaktionstemperatur von einigen Minuten bis zu einigen Stunden dauern kann. Weitere Herstellungsmöglichkeiten der erfindungsgemäßen Benzoxazin-Verbindungen der vorliegenden Erfindung können Burke et al. J. Org. Chem. , 30(10), 3423 (1965) und den US-Patenten 4607091, 5021484 und 5200452 entnommen werden.

Jede der oben gezeigten erfindungsgemäßen Benzoxazin-Verbindungen kann auch teilweise geöffnete Ringstrukturen umfassen, wobei die geöffnete Ringstruktur vorzugsweise durch den formalen Bruch der kovalenten Bindung zwischen zwischen A und A' oder zwischen B und B' erhalten wird (s. Formel B-O).

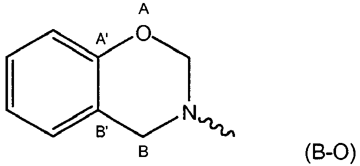

Die ringoffenen Strukturen gelten im Sinne der vorliegenden Erfindung auch als erfindungsgemäße Benzoxazin-Verbindungen, insbesondere als ringoffene Benzoxazin-Verbindungen.

Die polymerisierbare Zusammensetzung der vorliegenden Erfindung kann entweder nur eine Benzoxazin-Verbindung oder eine Mischung verschiedener Benzoxazin-Verbindungen enthalten. So sind beispielsweise Mischungen von mono- und multifunktionellen Benzoxazin-Verbindungen ebenso bevorzugt, wie Mischungen verschiedener N-Alkyl- oder N-Alkenyl-Benzoxazin-Verbindungen oder Mischungen aus mindestens einer N-Alkyl-Benzoxazin-Verbindung und mindestens einer N-Alkenyl-Benzoxazin-Verbindung.

In einer bevorzugten Ausführungsform der Erfindung enthält die polymerisierbare Zusammensetzung mindestens eine polymerisierbare Benzoxazin-Verbindung oder eine Mischung verschiedener polymerisierbarer Benzoxazin-Verbindungen in Mengen von 50 bis 99 Gew.-%, vorzugsweise von 70 bis 95 Gew.-% und überaus bevorzugt von 80 bis 90 Gew.-%, jeweils bezogen auf die Gesamtmenge der Zubereitung.

Die Polymerisation der polymerisierbaren Benzoxazin-Verbindung oder der Mischung verschiedener polymerisierbarer Benzoxazin-Verbindungen kann bei erhöhten Temperaturen nach einem selbstinitiierenden Mechanismus oder durch Zugabe von kationischen Initiatoren erfolgen.

Geeignete kationische Initiatoren sind beispielsweise Lewissäuren oder andere kationische Initiatoren, wie beispielsweise Metallhalogenide, Organometall-Reagenzien, wie Metalloporphyrine, Methyltosylate, Methyltriflate oder Trifluorsulfonsäuren. Ebenso können basische Reagenzien verwendet werden, um die Polymerisation der polymerisierbaren Benzoxazin-Verbindung oder der Mischung verschiedener polymerisierbarer Benzoxazin-Verbindungen zu initiieren. Geeignete basische Reagenzien können beispielsweise ausgewählt werden aus Imidazol oder Imidazolderivaten.

In einer bevorzugten Ausführungsform umfasst die polymerisierbare Zusammensetzung als polymerisierbare Harzkomponente nur eine oder mehrere Benzoxazin-Verbindungen. Für bestimmte Anwendungszwecke kann es aber vorteilhaft sein, dass die polymerisierbare Zusammensetzung neben der genannten Benzoxazin-Verbindung zusätzlich andere Verbindungen umfasst. Geeignete Verbindungen können beispielsweise ausgewählt werden aus der Gruppe der Epoxidharze, Polyurethanharze, Polyesterharze, Polyamidharze oder Phenolharze oder aus deren beliebigen Mischungen.

Unter einem "Epoxidharz" wird im Rahmen der vorliegenden Erfindung eine Harz-Zusammensetzung verstanden, die auf der Basis von Epoxidverbindungen oder epoxidhaltigen Verbindungen gebildet wird. In einer bevorzugten Ausführungsform der Erfindung können die Epoxidverbindungen oder epoxidhaltigen Verbindungen des Epoxidharzsystems der polymerisierbaren Zubereitung sowohl oligomere als auch monomere Epoxidverbindungen sowie Epoxide vom polymeren Typ umfassen und können aliphatische, cycloaliphatische, aromatische oder heterocyclische Verbindungen darstellen. Geeignete Epoxidharze im Rahmen der vorliegenden Erfindung sind beispielsweise vorzugsweise ausgewählt aus Epoxidharzen vom Bisphenol-A-Typ, Epoxidharzen vom Bisphenol-S-Typ, Epoxidharzen vom Bisphenol-F-Typ, Epoxidharzen vom Phenol-Novolak-Typ, Epoxidharzen vom Cresol-Novolak-Typ, epoxidierten Produkten zahlreicher Dicyclopentadien-modifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze wie Neopentylglykoldiglycidylether und 1,6-Hexandioldiglycidylether, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat ein.

Insbesondere umfassen die Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol.

Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (z.B. diejenigen, welche unter den Handelsbezeichnungen "Epon 828", "Epon 825", "Epon 1004" und "Epon 1010" der Hexion Specialty Chemicals Inc., "DER-331", "DER-332", "DER-334", "DER-732" und "DER-736" der Dow Chemical Co. erhältlich sind), Vinylcyclohexendioxid, 3,4-Epoxycyclohexylmethyl-3,4-epoxycyclohexencarboxylat, 3,4-Epoxy-6-methylcyclohexylmethyl-3,4-epoxy-6-methyl-cyclohexencarboxylat, Bis(3,4-epoxy-6-methylcyclohexylmethyl)adipat, Bis(2,3-epoxy-cyclopentyl)ether, aliphatisches, mit Polypropylenglycol modifiziertes Epoxid, Dipentendioxid, epoxidiertes Polybutadien (z.B. Krasol Produkte von Sartomer), Epoxidfunktionalitaet enthaltendes Siliconharz, flammhemmende Epoxidharze (z.B. "DER-580", ein bromiertes Epoxidharz vom Bisphenol-Typ, welches von Dow Chemical Co. erhaeltlich ist), 1,4-Butandiol-diglycidylether eines Phenolformaldehyd-Novolaks (z.B. "DEN-431" und "DEN-438" der Dow Chemical Co.), sowie Resorcin-diglycidylether (z.B. "Kopoxite" der Koppers Company Inc.), Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie z.B. C8-C10-Alkyl-glycidylether (z.B. "HELOXY Modifier 7" der Hexion Specialty Chemicals Inc.), C12-C14-Alkyl-glycidylether (z.B. "HELOXY Modifier 8" der Hexion Specialty Chemicals Inc.), Butylglycidylether (z.B. "HELOXY Modifier 61" der Hexion Specialty Chemicals Inc.), Cresylglycidylether (z.B. "HELOXY Modifier 62" der Hexion Specialty Chemicals Inc.), p-tert.-Butylphenyl-glycidylether (z.B. "HELOXY Modifier 65" der Hexion Specialty Chemicals Inc.), polyfunktionelle Glycidylether wie z.B. Diglycidylether von 1,4-Butandiol (z.B. "HELOXY Modifier 67" der Hexion Specialty Chemicals Inc.), Diglycidylether von Neopentylglycol (z.B. "HELOXY Modifier 68" der Hexion Specialty Chemicals Inc.), Diglycidylether von Cyclohexandimethanol (z.B. "HELOXY Modifier 107" der Hexion Specialty Chemicals Inc.), Trimethylolethan-triglycidilether (z.B. "HELOXY Modifier 44" der Hexion Specialty Chemicals Inc.), Trimethylolpropan-triglycidylether (z.B. "HELOXY Modifier 48" der Hexion Specialty Chemicals Inc.), Polyglycidylether eines aliphatischen Polyols (z.B. "HELOXY Modifier 84" der Hexion Specialty Chemicals Inc.), Polyglycoldiepoxid (z.B. "HELOXY Modifier 32" der Hexion Specialty Chemicals Inc.), Bisphenol F-Epoxide (z.B. "EPN-1138" oder GY-281" der Huntsman Int. LLC), 9,9-Bis-4-(2,3-epoxypropoxy)-phenylfluorenon (z.B. "Epon 1079" der Hexion Specialty Chemicals Inc.).

Weitere bevorzugte kommerziell erhältliche Verbindungen sind z. B. ausgewählt aus Araldite^{™} 6010, Araldit^{™} GY-281^{™}, Araldit^{™} ECN-1273_{,} Araldit^{™} ECN-1280, Araldi^{™} MY-720, RD-2 existiert von der Huntsman Int. LLC; DEN^{™} 432, DEN^{™} 438, DEN^{™} 485 von Dow Chemical Co., Epon^{™} 812, 826, 830, 834, 836, 871, 872,1001, 1031 etc. von Hexion Specialty Chemicals Inc. und HPT^{™} 1071, HPT^{™} 1079 ebenfalls von Hexion Specialty Chemicals Inc., als Novolak-Harze weiterhin beispielsweise Epi-Rez^{™} 5132 von Hexion Specialty Chemicals Inc., ESCN-001 von Sumitomo Chemical, Quatrex 5010 von Dow Chemical Co., RE 305S von Nippon Kayaku, Epiclon^{™} N673 von DaiNipon Ink Chemistry oder Epicote^{™} 152 von Hexion Specialty Chemicals Inc..

In einer bevorzugten Ausführungsform umfasst die erfindungsgemäße polymerisierbare Zubereitung eine Mischung mehrerer der genannten Epoxidharze.

Vorzugsweise beträgt der Anteil des Epoxidharzes oder der Mischung mehrerer Epoxidharze an der Gesamtmenge der polymerisierbaren Zubereitung 5 bis 50 Gew.-%, besonders bevorzugt 10 bis 30 Gew.-% und überaus bevorzugt 20 bis 25 Gew.-%.

Die erfindungsgemäße polymerisierbare Zusammensetzung umfasst weiterhin als zusätzliche Komponente die bereits genannten Kern-Schale-Partikel, wobei der Kern der Kern-Schale-Partikel mindestens ein (Co)polymer mindestens eines ethylenisch ungesättigten Monomers (A) enthält und die Schale der Kern-Schale-Partikel mindestens ein vernetztes (Co)polymer mindestens eines ethylenisch ungesättigten Monomers (B) enthält, wobei das ethylenisch ungesättigte Monomer (B) mindestens eine aromatische Gruppe umfasst.

Unter dem Begriff (Co)polymer sind im Rahmen der vorliegenden Erfindung sowohl Polymere als auch Copolymere zu verstehen.

Unter dem Begriff eines "ethylenisch ungesättigten Monomers" sind im Rahmen der vorliegenden Erfindung solche Monomere zu verstehen, die über mindestens eine polymerisierbare Kohlenstoff-Kohlenstoff-Doppelbindung verfügen, wobei die genannte Doppelbindung in mono-, di-, tri- oder tetrasubstituierter Form vorliegen kann.

Im Rahmen der vorliegenden Erfindung wird ein ethylenisch ungesättigtes Monomer (B), das mindestens eine aromatische Gruppe umfasst, als ethylenisch ungesättigtes aromatisches Monomer bezeichnet. Bevorzugte ethylenisch ungesättigte aromatische Monomere werden vorzugsweise ausgewählt aus vinyl-aromatischen Verbindungen oder aus aromatischen Estern von (Meth)acrylsäuren.

Unter dem Begriff "(Meth)acrylsäure" werden im Rahmen der vorliegenden Erfindung sowohl Acrylsäuren als auch Methacrylsäuren verstanden.

Die aromatischen Ester von (Meth)acrylsäuren umfassen dabei vorzugsweise aromatische oder heteroaromatische Reste, wobei die aromatischen oder heteroaromatischen Reste 5 bis 10 Kohlenstoffatome, insbesondere 6 Kohlenstoffatome, umfassen und die genannten Reste jeweils Teil des Alkohols sind, der in einer Veresterungsreaktion mit Acrylsäuren oder Methacrylsäuren zur Herstellung der (Meth)acrylsäureester verwendet wird.

Ein besonders bevorzugter Alkohol in diesem Zusammenhang ist Benzylalkohol.

Generell kann der aromatische oder heteroaromatische Rest direkt mit dem Sauerstoffatom (-O-) der Estergruppe (-C(=O)-O-) verknüpft sein. Ungeachtet dessen ist es ebenfalls möglich, dass der aromatische oder heteroaromatische Rest über eine divalente Verknüpfungsgruppe, umfassend 1 bis 8 Kohlenstoffatome, mit dem Sauerstoffatom (-O-) der Estergruppe (-C(=O)-O-) verknüpft ist. Sofern möglich, können Kohlenstoffatome der divalenten Verknüpfungsgruppe nicht nur durch kovalente Bindungen miteinander verbunden sein, sondern auch durch divalente Heteroatome, beispielsweise ausgewählt aus Sauerstoff und/oder Schwefel.

Besonders bevorzugte aromatische Ester von (Meth)acrylsäuren werden dabei aus Verbindungen der allgemeinen Formel (M-I) ausgewählt, 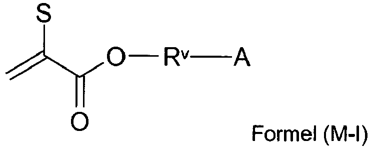 wobei S ausgewählt wird aus Wasserstoff oder Methyl, R^{v} für eine kovalente Bindung steht oder eine divalente Verbindungsgruppe ist, die 1 bis 100 Kohlenstoffatome umfasst und A ein aromatischer oder heteroaromatischer Rest ist, der gegebenenfalls substituiert vorliegt.

Die divalente organischen Verbindungsgruppe R^{v} umfasst vorzugsweise 2 bis 50, besonders bevorzugt 2 bis 25 und insbesondere 2 bis 20 Kohlenstoffatome. Weiterhin kann die divalente organische Verbindungsgruppen R^{v} aus linearen oder verzweigten, gegebenenfalls substituierten Alkylengruppen ausgewählt werden, die 1 bis 15 Kohlenstoffatome umfassen, wobei die Alkylengruppen gegebenenfalls durch mindestens ein Heteroatom ausgewählt aus Sauerstoff, Schwefel oder Stickstoff unterbrochen sind.

Unter dem Begriff "unterbrochen" wird im Sinne der vorliegenden Erfindung verstanden, dass in einer divalenten Alkylengruppe mindestens ein nicht-terminales Kohlenstoffatom der genannten Gruppe durch ein Heteroatom ersetzt wird, wobei das Heteroatom vorzugsweise ausgewählt wird aus *--S--* (Schwefel),*--O-* (Sauerstoff), und *--NR^{a}--* (Stickstoff), wobei R^{a} insbesondere für Wasserstoff oder für eine linearen oder verzweigten, gegebenenfalls substituierten Alkylgruppen mit 1 bis 15 Kohlenstoffatomen steht.

Bevorzugte aromatische Reste A werden aus Phenyl oder Biphenyl ausgewählt, wobei Phenyl bevorzugt ist. Die vorgenannten Reste können auch substituiert sein, wobei geeignete Substituenten beispielsweise ausgewählt werden aus Chlor-, Brom-, lod-, Amin-, Hydroxy-, Carboxyl-, Thiol-, Alkyl-, Alkenyl- und Alkinylgruppen.

Bevorzugte vinyl-aromatische Verbindungen umfassen mindestens einen aromatischen oder heteroaromatischen Rest, wobei der aromatische oder heteroaromatische Rest vorzugsweise 5 bis 10 Kohlenstoffatome, insbesondere 6 Kohlenstoffatome umfasst.

Besonders bevorzugte ethylenisch ungesättigte aromatische Monomere werden im Rahmen der vorliegenden Erfindung ausgewählt aus Styrol, Styrolderivaten (z.B. alpha-Alkylstyrolen, wie etwa Methylstyrol), Vinyltoluol, Phenoxyalkylacrylaten, Methacrylaten, wie z.B. Phenylethylmethacrylat, Phenylmethacrylat oder Benzylmethacrylat, oder Acrylaten, wie z.B. Phenylacrylat oder Benzylacrylat. Ganz besonders bevorzugte ethylenisch ungesättigte aromatische Monomere (B) sind Styrol und/oder Benzyl(meth)acrylat, insbesondere Benzylmethacrylat.

Bevorzugte ethylenisch ungesättigte Monomere (A) umfassen sowohl ethylenisch ungesättigte aromatische Monomere als auch ethylenisch ungesättigte nicht-aromatische Monomere, wobei der Begriff des ethylenisch ungesättigten aromatischen Monomers in Übereinstimmung mit der oben aufgeführten Definition zu verstehen ist.

In einer besonders bevorzugten Ausführungsform der vorliegenden Erfindung wird das ethylenisch ungesättigte aromatische Monomer (A) ausschließlich aus ethylenisch ungesättigten nicht-aromatischen Monomeren ausgewählt.

Beispiele für ethylenisch ungesättigte nicht-aromatische Monomere sind beispielsweise:
(i) Ester ethylenisch ungesättigter Säuren, wie etwa deren Alkyl- oder Cycloalkylester, wobei die Alkyl-oder Cycloalkylester bis zu 20 Kohlenstoffatome umfassen können. Besonders bevorzugte Alkylester sind beispielsweise die Methyl-, Ethyl-, Propyl-, n-Butyl-, sec-Butyl-, tert-Butyl-, Hexyl-, Ethylhexyl-, Stearyl- und Lauryl-Ester von verschiedenen ethylenisch ungesättigten Säuren, vorzugsweise ausgewählt aus der Gruppe bestehend aus Acrylsäure, Methacrylsäure, Krotonsäure, Ethacrylsäure, Vinylphosphonsäure und Vinylsulfonsäure. Besonders bevorzugte Cycloalkylester sind beispielsweise die Cyclohexyl-, Isobornyl-, Dicyclopentadienyl- und tert-Butylcyclohexyl-Ester verschiedener ethylenisch ungesättigter Säuren, vorzugsweise ausgewählt aus der Gruppe bestehend aus Acrylsäure, Methacrylsäure, Krotonsäure, Ethacrylsäure, Vinylphosphonsäure und Vinylsulfonsäure;
(ii) Monomere, die zumindest eine Hydroxyl- oder Hydroxylmethylamino-Gruppe pro Molekül umfassen, wie etwa Hydroxyalkylester alpha,beta-ungesättigter Carbonsäuren, wie etwa die Hydroxyalkylester von Acrylsäuren, Methacrylsäuren und/oder Ethacrylsäuren, wobei die Hydroxyalkyl-Gruppe bis zu 20 Kohlenstoffatome umfassen kann. Geeignete Hydroxyalkylester sind beispielsweise die 2-Hydroxyethyl-, 2-Hydroxypropyl-, 3-Hydroxypropyl-, 3-Hydroxybutyl-, 4-Hydroxybutyl-Ester von Acrylsäure, Methacrylsäure und/oder Ethacrylsäure; Ester ethylenisch ungesättigter Alkohole, wie z.B. Allylester; Reaktionsprodukte ethylenisch ungesättigter Carbonsäuren mit Glycidylestern alpha-verzweigter Monocarbonsäuren, die 5 bis 18 Kohlenstoffatome umfassen;
(iii) Vinylester alpha-verzweigter Monocarbonsäuren, die 5 bis 18 Kohlenstoffatome umfassen, wie beispielsweise die Vinylester von Monocarbonsäuren mit dem Namen Versatic®-Säure;
(iv) Cyclische und/oder acyclische Olefine, wie beispielsweise Ethylen, Propylen, But-1-en, Pent-1-en, Cyclohexen, Cyclopenten, Norbornen, Butadien, Isopren, Cyclopentadien und/oder Dicyclopentadien;
(v) Amide alpha,beta-ungesättigter Carbonsäuren, wie beispielsweise (Meth)crylamid, N-Methyl-, N,N-Dimethyl-(Meth)acrylamid, N-Ethyl-(Meth)acrylamid, N,N-Diethyl-(Meth)acrylamid, N-Propyl-(Meth)acrylamid, N,N-Dipropyl-(Meth)acrylamid, N-Butyl-(Meth)acrylamid, N,N-Dibutyl-(Meth)acrylamid und/oder N,N-Cyclohexyl-methyl-(Meth)acrylamid;
(vi) Monomere, die Epoxy-Gruppen umfassen, wie beispielsweise die Glycidylester von Acrylsäure, Methacrylsäure, Ethacrylsäure, Krotonsäure, Maleinsäure, Fumarsäure und/oder Itaconsäure;
(vii) Nitrile, wie beispielsweise Acrylnitril oder Methacrylnitril;
(viii) Vinyl-Verbindungen, beispielsweise ausgewählt aus der Gruppe bestehend aus Vinylhalogeniden, wie etwa Vinylchlorid, Vinylfluorid, Vinylidendichlorid, Vinylidendifluorid; Vinylamiden, wie etwa N-Vinylpyrrolidon; Vinylethern, wie etwa n-Propylvinylether, Isopropylvinylether, n-Butylvinylether, Isobutylvinylether oder Vinylcyclohexylether und Vinylestern, wie etwa Vinylacetat, Vinylpropionat und Vinylbutyrat; und
(ix) Allylverbindungen, ausgewählt aus der Gruppe bestehend aus Allylethern und Allylestern, wie etwa Propylallylether, Butylallylether, Allylacetat und Allylpropionat.

Besonders bevorzugte ethylenisch ungesättigte nicht-aromatische Monomere sind die nicht-aromatischen C₂ bis C₈-Ester von Methacrylsäuren, wie beispielsweise, Ethyl-(Meth)acrylat, Propyl-(Meth)acrylat, n-Butyl-(Meth)acrylat, sec-Butyl-(Meth)acrylat, tert-Butyl-(Meth)acrylat und Hexyl-(Meth)acrylat. Ein ganz besonders bevorzugtes ethylenisch ungesättigtes nicht-aromatisches Monomer im Sinne der vorliegenden Erfindung ist n-Butylacrylat.

In einer bevorzugten Ausführungsform der Erfindung wird das ethylenisch ungesättigte Monomer (A) aus ethylenisch einfach ungesättigten Monomeren ausgewählt. In einer ebenfalls bevorzugten Ausführungsform der Erfindung wird das ethylenisch ungesättigte Monomer (B), umfassend eine aromatische Gruppe, aus ethylenisch einfach ungesättigten Monomeren, umfassend eine aromatische Gruppe, ausgewählt.

Unter ethylenisch einfach ungesättigten Monomeren sind im Sinne der vorliegenden Erfindung solche Monomere zu verstehen, die nur über eine Kohlenstoff-Kohlenstoff Doppelbindung verfügen.

Wie oben erwähnt, enthält die Schale der Kern-Schale-Partikel mindestens ein vernetztes (Co)polymer mindestens eines ethylenisch ungesättigten Monomers (B), umfassend mindestens eine aromatische Gruppe. Dieses vernetzte (Co)polymer wird im Folgenden als Schalen-(Co)polymer bezeichnet.

Der Anteil des ethylenisch ungesättigten Monomers (B) am Schalen-(Co)polymer sollte so bemessen sein, dass die Kern-Schale-Partikel eine gute Kompatibilität und Dispergierbarkeit in der Benzoxazinmatrix aufweisen.

In einer Ausführungsform der Erfindung enthält die Schale der Kern-Schale-Partikel mindestens ein vernetztes (Co)polymer mindestens eines ethylenisch ungesättigten Monomers (B), das mindestens eine aromatische Gruppe umfasst,wobei der Anteil des mindestens einen ethylenisch ungesättigten Monomers (B) (in polymerisierter Form) am vernetzten (Co)polymer vorzugsweise mindestens 5 Gew.-%, mindestens 10 Gew.-%, mindestens 15 Gew.-%, mindestens 20 Gew.-%, mindestens 40 Gew.-%, mindestens 60 Gew.-%, mindestens 80 Gew.-% oder mindestens 90 Gew.-% beträgt.

In einer weiteren Ausführungsform besteht die Schale der Kern-Schale-Partikel aus einem vernetzten (Co)polymer mindestens eines ethylenisch ungesättigten Monomers (B), das mindestens eine aromatische Gruppe umfasst, wobei der Anteil des mindestens einen ethylenisch ungesättigten Monomers (B) (in polymerisierter Form) am vernetzten (Co)polymer vorzugsweise mindestens 5 Gew.-%, mindestens 10 Gew.-%, mindestens 15 Gew.-%, mindestens 20 Gew.-%, mindestens 40 Gew.-%, mindestens 60 Gew.-%, mindestens 80 Gew.-% oder mindestens 90 Gew.-% beträgt.

Die Schale der Kern-Schale-Partikel kann auch ein Homopolymer eines ethylenisch ungesättigten Monomers (B), das mindestens eine aromatische Gruppe trägt, umfassen oder besteht aus diesem.

In einer bevorzugten Ausführungsform der Erfindung ist das Schalen-(Co)polymer daher ein Homopolymer eines ethylenisch ungesättigten aromatischen Monomers, insbesondere ein Homopolymer eines ethylenisch einfach ungesättigten, aromatischen Monomers, insbesondere ein Homopolymer von vinyl-aromatischen Verbindungen oder von aromatischen Estern von (Meth)acrylsäuren. Ein ganz besonders bevorzugtes Schalen-(Co)polymer ist ein Homopolymer von Styrol oder Benzyl(meth)acrylat.

Sofern das Schalen-(Co)polymer ein Homopolymer eines ethylenisch ungesättigten aromatischen Monomers ist, sind unter dem Begriff des Homopolymers im Sinne der vorliegenden Erfindung vorzugsweise solche Polymere zu verstehen, die im Wesentlichen nur aus einem ethylenisch ungesättigten, aromatischen Monomer bestehen, d.h. der Anteil eines ethylenisch ungesättigten aromatischen Monomers an der Gesamtmenge aller das entsprechende Polymer bildenden Monomere beträgt mindestens 98%.

In einer weiteren bevorzugten Ausführungsform der Erfindung ist das Schalen-(Co)polymer ein Copolymer mindestens zweier ethylenisch ungesättigter aromatischer Monomere, insbesondere ein Copolymer mindestens zweier ethylenisch, einfach ungesättigter, aromatischer Monomere. Ein ganz besonders bevorzugtes Schalen-Copolymer ist ein Copolymer aus Styrol und Benzyl(meth)acrylat, wobei das Gewichtsverhältnis zwischen Styrol und Benzyl(meth)acrylat vorzugsweise zwischen 1:1 und 1:50, insbesondere zwischen 1:2 und 1:5 liegt.

Weiterhin besteht die Schale der Kern-Schale-Partikel in einer überaus bevorzugten Ausführungsform der Erfindung nur aus einem einzigen vernetzten Schalen-(Co)polymer und ggf. weiteren Additiven. In einer ebenfalls bevorzugten Ausführungsform der Erfindung besteht die Schale der Kern-Schale-Partikel aus mindestens zwei verschiedenen Schalen-(Co)polymeren, wobei mindestens eines der genannten Schalen-(Co)polymere ein vernetztes (Co)polymer ist.

Wie oben erwähnt, enthält der Kern der Kern-Schale-Partikel mindestens ein (Co)polymer mindestens eines ethylenisch ungesättigten Monomers (A). Dieses (Co)polymer wird im Folgenden als Kern-(Co)polymer bezeichnet.

In einer bevorzugten Ausführungsform der Erfindung ist das Kern-(Co)polymer ein Homopolymer eines ethylenisch einfach ungesättigten Monomers, insbesondere ein Homopolymer eines ethylenisch einfach ungesättigten, nicht-aromatischen Monomers, insbesondere ein Homopolymer von Ethyl-(Meth)acrylat, Propyl-(Meth)acrylat, n-Butyl-(Meth)acrylat, sec-Butyl-(Meth)acrylat, tert-Butyl-(Meth)acrylat oder Hexyl-(Meth)acrylat. Ein ganz besonders bevorzugtes Kern-(Co)polymer ist ein Homopolymer von n-Butylacrylat.

Sofern das Kern-(Co)polymer ein Homopolymer eines ethylenisch ungesättigten Monomers ist, sind unter dem Begriff des Homopolymers im Sinne der vorliegenden Erfindung vorzugsweise solche Polymere zu verstehen, die im Wesentlichen nur aus einem ethylenisch ungesättigten, Monomer bestehen, d.h. der Anteil eines ethylenisch ungesättigten Monomers an der Gesamtmenge aller das entsprechende Polymer bildenden Monomere beträgt mindestens 98%.

Ungeachtet dessen kann das Kern-(Co)polymer in polymerisierter Form auch Butadien und/oder Mischungen von Butadien mit anderen polymerisierbaren Monomeren umfassen. Beispielsweise kann das Kern-(Co)polymer durch eine Copolymerisation von Butadien und Acrylnitril gebildet werden.

In einer weiteren bevorzugten Ausführungsform der Erfindung ist das Kern-(Co)polymer ein Copolymer mindestens zweier ethylenisch ungesättigter Monomere (A), insbesondere ein Copolymer mindestens zweier ethylenisch einfach ungesättigter, nicht-aromatischer Monomere.

Weiterhin besteht der Kern der Kern-Schale-Partikel in einer überaus bevorzugten Ausführungsform der Erfindung nur aus einem einzigen Kern-(Co)polymer und ggf. weiteren Additiven. In einer ebenfalls bevorzugten Ausführungsform der Erfindung besteht der Kern der Kern-Schale-Partikel aus mindestens zwei verschiedenen Kern-(Co)polymeren.

Wie oben erwähnt, enthält die Schale der erfindungsgemäßen Kern-Schale-Partikel mindestens ein vernetztes Schalen-(Co)polymer. Ein vernetztes Schalen-(Co)polymers ist im Sinne der vorliegenden Erfindung zwingend erforderlich, da durch die Vernetzung die Stabilität der Schale der erfindungsgemäßen Kern-Schale-Partikel in der umgebenden Matrix deutlich erhöht wird. Weiterhin kann durch den Grad der Vernetzung das Quellverhalten der Schalen der erfindungsgemäßen Kern-Schale-Partikel bestimmt werden. Schalen-(Co)polymere mit guter Quellbarkeit zeigen dabei oft eine geringere Koagulationstendenz als vergleichbare Schalen-(Co)polymere mit geringerer Quellbarkeit. Ein zu hohe Quellbarkeit ist allerdings im Sinne der vorliegenden Erfindung unerwünscht, wenn sie zu einer Auflösung, insbesondere einer vollständigen Auflösung, des erfindungsgemäßen Schalen-(Co)polymers in der umgebenden Matrix führt.

In einer weiteren bevorzugten Ausführungsform der Erfindung enthält der Kern der Kern-Schale-Partikel mindestens ein vernetztes Kern-(Co)polymer.

Ein vernetztes Kern-(Co)polymer ist vor allem dann von besonders großem Vorteil, wenn die Schale des erfindungsgemäßen Kern-Schale-Partikel sehr permeabel ist.

Im Sinne der vorliegenden Erfindung ist unter einem "vernetztem (Co)polymer" insbesondere ein Copolymer zu verstehen, in dem mehr als 1 %, vorzugsweise mehr als 1,5 %, besonders bevorzugt mehr als 2% und ganz besonders mehr als 4% an Monomer-Einheiten einer Kette mit Monomer-Einheiten einer anderen Kette vernetzt sind.

Vernetzte Schalen-(Co)polymere und/oder vernetzte Kern-(Co)polymere werden vorzugsweise durch Einsatz eines Vernetzungsmittels während der Herstellung des Kern-(Co)polymers und/oder des Schalen-(Co)polymers erhalten.

Geeignete Vernetzungsmittel im Sinne der vorliegenden Erfindung sind vorzugsweise polymerisierbare Monomere, die mindestens zwei polymerisierbare Gruppen pro Molekül aufweisen, wie etwa Divinylstyrol. Besonders geeignet sind auch Di-,Tri-, Tetra- und/oder Pentaacrylate, die beispielsweise ausgewählt werden können aus der Gruppe bestehend aus Pentaerythrioltetraacrylat (PETTA), Trimethylolpropantriacrylat (TMPTA), Di-trimethylolpropantetraacrylat (DiTMPTTA), Dipentaerythriolpentaacrylat (DiPEPA) oder Tripropylenglykoldiacrylat (TPGDA) oder aus deren beliebigen Mischungen.

Ungeachtet dessen können vernetzte Schalen-(Co)polymere und/oder vernetzte Kern-(Co)polymere auch durch nachträgliche Vernetzung des jeweiligen (Co)polymers, beispielsweise durch UV-, Röntgen-, Gamma- oder Elektronenstrahlen, erhalten werden.

Eine Vernetzung des Schalen-(Co)-Polymers kann auch durch kovalente Anbindung des Schalen-(Co)polymers an den Kern der erfindungsgemäßen Kern-Schale-Partikel erfolgen, wobei die kovalente Anbindung beispielsweise mittels Übertragungsreaktionen erreicht werden kann.

In einer bevorzugten Ausführungsform der Erfindung enthält die Schale der Kern-Schale-Partikel daher mindestens ein vernetztes (Co)polymer (Schalen-(Co)polymer), das durch Polymerisation mindestens eines ethylenisch ungesättigten Monomers (B), umfassend eine aromatische Gruppe, in Gegenwart eines Vernetzungsmittels hergestellt wird.

Bei der Herstellung der Schalen-(Co)polymere wird das Vernetzungsmittel, bezogen auf die Gesamtmenge des mindestens einen ethylenisch ungesättigten Monomers (B), vorzugsweise in einer Menge von 0,01 bis 2 Gew.-%, besonders bevorzugt in einer Menge von 0,1 bis 1 Gew.-%, eingesetzt.

In einer weiteren bevorzugten Ausführungsform der Erfindung enthält der Kern der Kern-Schale-Partikel mindestens ein (Co)polymer (Kern-(Co)polymer), das durch radikalische Emulsionspolymerisation mindestens eines ethylenisch ungesättigten Monomers (A) gegebenenfalls in Gegenwart eines Vernetzungsmittels hergestellt wird.

In einer überaus bevorzugten Ausführungsform der Erfindung enthält der Kern der Kern-Schale-Partikel mindestens ein (Co)polymer (Kern-(Co)polymer), das durch radikalische Miniemulsionspolymerisation mindestens eines ethylenisch ungesättigten Monomers (A) gegebenenfalls in Gegenwart eines Vernetzungsmittels hergestellt wird.

Bei der Herstellung der Kern-(Co)polymere wird das Vernetzungsmittel, bezogen auf die Gesamtmenge des mindestens einen ethylenisch ungesättigten Monomers (A), vorzugsweise in einer Menge von 0,01 bis 2 Gew.-%, besonders bevorzugt in einer Menge von 0,1 bis 1 Gew.-% eingesetzt.

Miniemulsionen können als wässrige Dispersionen stabiler Öltröpfchen mit Tropfengrößen von etwa 10 bis etwa 600 nm verstanden werden, die durch intensive Scherung eines Systems erhalten werden, welches Öl, Wasser, ein Tensid und ein Hydrophob enthält. Die Hydrophobe, die für die Herstellung stabiler Miniemulsion erforderlich sind, sind beispielsweise Monomere, welche eine geringe Wasserlöslichkeit aufweisen. Der Hydrophob unterdrückt den Massenaustausch zwischen den verschiedenen Öltröpfchen durch osmotische Kräfte (die Ostwald-Reifung), aber direkt nach der Miniemulsionsbildung ist die Dispersion nur kritisch stabilisiert im Hinblick auf Stöße der Teilchen, und die Tropfen selbst können immer noch in ihrer Größe durch weitere Stöße und Verschmelzen anwachsen. Zu weiteren Einzelheiten bezüglich Miniemulsionen und Polymerisationen in Miniemulsionen wird verwiesen auf den Artikel von K. Landfester, F. Tiarks, H.-P. Hentze, M. Antonietti "Polyaddition in miniemulsions: A new route to polymer dispersions" in Macromol. Chem. Phys. 201, 1-5 (2000), dessen Inhalt hiermit durch Bezugnahme eingeschlossen ist. Ferner wird verwiesen auf die dort referierte Druckschrift E. D. Sudol, M. S. Es-Aasser, in: "Emulsion Polymerization and Emulsion Polymers", P. A. Lovell, M. S. EI-Aasser, Eds., Chichester 1997, S. 699, deren Inhalt ebenfalls hiermit durch Bezugnahme eingeschlossen ist.

Die Herstellung der Mikroemulsion erfolgt in an sich bekannter Weise. Es kann verwiesen werden auf die bereits zitierten Literaturstellen, nämlich den Artikel von Landfester et al., die dort referierte Druckschrift von Sudol et al. sowie auf die Offenlegungsschriften WO 98/02466, DE 19628142 A1, DE 19628142 A1, DE 19628143 A1, DE 19628143 A1 und EP 818471 A1.

Zur Herstellung der Miniemulsion wird zunächst in einfacher, an sich bekannter Weise eine wässrige Makroemulsion hergestellt, die das mindestens eine ethylenisch ungesättigte Monomer (A) sowie das Tensid (oberflächenaktive Substanz) enthält.

Nachdem die Mischung homogenisiert und in eine Makroemulsion überführt worden ist, wird die auf diese Weise gebildete Makroemulsion anschließend in üblicher, dem Fachmann bekannten Weise in eine so genannte Miniemulsion, eine sehr stabile Art von Emulsion, überführt, z. B. mittels Behandlung der zuvor erzeugten Makroemulsion durch Ultraschall, durch Hochdruckhomogenisation oder durch einen Microfluidizer. Die Feinverteilung der Komponenten wird im Allgemeinen durch einen hohen lokalen Energieeintrag erzielt.

Bei der erfindungsgemäß verwendeten Miniemulsion handelt es sich um eine im wesentlichen wässrige, durch die grenzflächenaktive Substanz stabilisierte Emulsion von Monomeren mit einer Teilchengröße der emulgierten Tröpfchen von 10 nm bis 600 nm, insbesondere von 40 nm bis 450 nm, vorzugsweise von 50 nm bis 400 nm.

Die Durchmesser der Miniemulsionströpfchen lassen sich in dem genannten Bereich leicht einstellen, ein entscheidender Parameter dabei ist die Art und Konzentration der verwendeten Tenside. So werden in direkten Miniemulsionen mit ionischen Tensiden wie Natrium-Dodecylsulfat (SDS), Cetyltrimethylammoniumbromid (CTMA-Br) kleinere Miniemulsionströpfchen erhalten als mit nichtionischen Tensiden.

Miniemulsionströpfchen können als stabile Nanoreaktoren aufgefasst werden, da Diffusionsvorgänge durch das Hydrophob, aber auch durch die niedrige Polydispersität und die Abwesenheit von Miszellen, weitestgehend unterdrückt werden. In diesem Punkt unterscheidet sich die Miniemulsionsmethode wesentlich von der normalen Emulsionspolymerisation, die diffusionskontrolliert abläuft. So lassen sich in Miniemulsionen Monomere polymerisieren, wobei man dann von einer so genannten Miniemulsionspolymerisation spricht.

Die Verwendung des Miniemulsionspolymerisationsprozesses zur Herstellung des Kern-(Co)polymers und damit auch der Kerne der erfindungsgemäßen Kern-Schale-Partikel ist von großem Vorteil, da zum einen durch die Kontrolle der Tröpfchengröße die Größe der Kerne der erfindungsgemäßen Kern-Schale-Partikel leicht gesteuert werden kann.

Zum anderen erlaubt der Miniemulsionspolymerisationsprozess das problemlose Einbringen weiterer Additive in die Kerne, wobei die Additive vorzugsweise aus organischen und/oder anorganischen Materialien ausgewählt werden.

Die mittlere Teilchendurchmesser der Kerne der erfindungsgemäßen Kern-Schale-Partikel liegt vorzugsweise zwischen 30 und 500 nm, besonders bevorzugt zwischen 50 und 250 nm.

In einer bevorzugten Ausführungsform umfasst der Kern der Kern-Schale-Partikel anorganische Partikel. Die anorganischen Partikel müssen dabei eine Teilchengröße aufweisen, die mit dem vorgesehenen Verwendungszweck und der Größe der Kerne vereinbar ist. Die Untergrenze der Größe der anorganischen Partikel ist einerseits durch deren Herstellbarkeit und andererseits durch ihren Einfluss auf die Materialeigenschaften der Kerne gegeben.

Eine technisch zweckmäßige Untergrenze der mittleren Teilchengröße der anorganischen Partikel liegt bei 5 nm, vorzugsweise bei 10 nm und insbesondere bei 20 nm. Die Obergrenze der Partikelgröße ist durch die mittlere Teilchengröße der Kerne der erfindungsgemäßen Kern-Schale-Partikel begrenzt, weshalb die Obergrenze der mittleren Teilchengröße der anorganischen Partikel üblicherweise so gewählt wird, dass die maximale Ausdehnung der anorganischen Partikel in jede Raumrichtung kleiner ist als der mittlere Teilchendurchmessers der erfindungsgemäßen Kerne der Kern-Schale-Partikel. Insbesondere sind je nach Kerngröße anorganische Partikel bevorzugt, deren mittlerer Teilchendurchmesser zwischen 5 und 250 nm, vorzugsweise zwischen 10 und 125 nm und insbesondere zwischen 20 und 60 nm liegt.

Die mittlere Teilchengröße (D 50 Volumenmittel) der anorganischen Partikel und der Kerne kann nach üblichen Verfahren bestimmt werden, beispielsweise durch Lichtstreuung. Dabei sind unter "Partikel" diejenigen Teilchen zu verstehen, die in der organischen Mat¬ rix dispergiert vorliegen. Diese können Agglomerate kleinerer Einheiten darstellen. Das D 50 Volumenmittel ist derjenige Punkt in der Teilchengrößenverteilung, bei dem 50 Vol.-% der Teilchen einen kleineren und 50 Vol.-% der Teilchen einen größeren Durchmesser aufweisen. Die mittlere Teilchengröße kann dabei besonders bevorzugt durch ein Gerät des Typs Microtrac UPA 250 bestimmt werden.

Die maximale Ausdehnung der anorganischen Partikel in jede Raumrichtung kann dabei durch statistische Auswertung (elektronen-)mikroskopischer Aufnahmen erhalten werden.

Die anorganischen Partikel sind vorzugsweise ausgewählt aus Oxiden, Hydroxiden, Carbonaten und Kieselsäuren bzw. Silicaten. Als Oxide sind insbesondere Oxide des Titans wie beispielsweise Rutil oder Anatas geeignet. Aluminiumoxide oder- Hydroxide können ebenfalls eingesetzt werden. Auch Zinkoxide sind geeignet. Als Carbonate werden vorzugsweise Carbonate von Calcium und/oder Magnesium eingesetzt. Beispiele sind Kreide und Dolomit. Die anorganischen Partikel können auch gemischte Oxide/Hydroxide wie beispielsweise basische Aluminiumoxide oder basische Zinkoxide darstellen. Auch gemischte Carbonate/Hydroxide wie beispielsweise basisches Zinkcarbonat können verwendet werden.

Weitere bevorzugte anorganische Partikel sind Kieselsäuren bzw. Silicate. Als "Kieselsäuren" werden (Hydroxidgruppen-haltige) Siliciumoxide bezeichnet, die beispielsweise aus Silicium-HalogenVerbindungen durch Pyrolyse oder durch Hydrolyse erhalten werden können. Silicate können Salze von Kieselsäuren mit insbesondere Erdalkalimetallen darstellen. Auch die natürlich vorkommenden Alumosilicate, die beispielsweise Faser- oder Schichtstrukturen aufweisen können, sind geeignet. Beispiele hierfür sind Bentonite. Auch Calciumsilicate wie beispielsweise Wollastonit sind geeignet, ebenso Chlorite.

Die anorganischen Partikel erhält man in der genannten Teilchengröße beispielsweise durch Mahlung und/oder Sieben entsprechender Partikel bis zum gewünschten Feinverteilungsgrad.

In einer bevorzugten Ausführungsform der Erfindung umfasst der Kern der Kern-Schale-Partikel zusätzlich mindestens eine Verbindung ausgewählt aus der Gruppe der Polyepoxide, Polybenzoxazine, Polyurethane, Polyester, Polyamide, Phenolharze, Polyether, Polyimide, Polybenzimidazole, Polyetheretherketone oder Polysulfone.

Der Kern der Kern-Schale-Partikel kann ebenfalls eine Mischung zweier oder mehrerer der genannten Verbindungen enthalten.

Die genannten Verbindungen können dabei als reine Mischung und/oder als Copolymer mit dem mindestens einen Kern-(Co)polymer vorliegen. Der Einsatz der genannten Verbindungen ist vorteilhaft, da auf diese Weise die mechanischen Eigenschaften der Kerne gezielt auf einen bestimmten Aufgabenzweck oder auf die anderen Komponenten der erfindungsgemäßen polymerisierbaren Zusammensetzung abgestimmt werden können.

Die Schale der erfindungsgemäßen Kern-Schale-Partikel kann durch Umsetzung mit einer oder mehreren Verbindungen (Funktionalisierungsreagenz(ien)) modifiziert bzw. weiter funktionalisiert werden. Auf diese Weise entstehen funktionalisierte Kern-Schale-Partikel. Diese sind besonders vorteilhaft, da durch die Funktionalisierung der erfindungsgemäßen Kern-Schale-Partikel deren Eigenschaften und Oberflächenbeschaffenheit leicht modifiziert werden kann. Auf diese Weise können beispielsweise die mechanischen Eigenschaften der Kern-Schale-Partikel gezielt auf einen bestimmten Aufgabenzweck hin optimiert werden. Ebenfalls kann durch die Funktionalisierung eine bessere Anbindung der erfindungsgemäßen Kern-Schale-Partikel an die Benzoxazinmatrix erreicht werden.

Das Funktionalisierungsreagenz wird dabei vorzugsweise ausgewählt aus der Gruppe bestehend aus (Meth)acrylaten, Acrylat-funktionalisierten Benzoxazin-Verbindungen, Epoxy-Verbindungen, Silanen und Epoxysilanen oder aus deren beliebigen Mischungen.

Besonders bevorzugte Epoxysilane sind dabei Verbindungen der allgemeinen Formel (S-I), 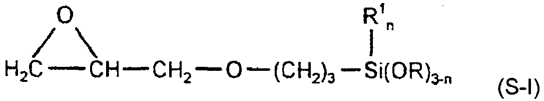 wobei R eine lineare oder verzweigte Alkylgruppe mit 1 bis 4 C-Atomen oder eine Arylgruppe mit 6 bis 12 C-Atomen und R¹ eine lineare oder verzweigte Alkylgruppe mit 1 bis 4 C-Atomen darstellen und n gleich 0 oder 1 oder 2 ist. Insbesondere sind 3-Glycidyloxypropyltrimethoxysilan (GLYMO), 3-Glycidyloxypropyltriethoxysilan (GLYEO), 3-Glycidyloxypropyltri-n-propoxysilan, 3-Glycidyloxypropyltri-iso-propoxysilan, 3-Glycidyloxypropyltri-n-butoxysilan und 3-Glycidyloxypropyltri-iso-butoxysilan oder deren Mischungen bevorzugt. Ein überaus bevorzugtes Epoxysilan im Sinne der vorliegenden Erfindung ist 3-Glycidyloxypropyltrimethoxysilan (GLYMO).

Der Aufbau der Schalen der erfindungsgemäßen Kern-Schale-Partikel erfolgt vorzugsweise durch Saatpolymerisation. Bei der Saatpolymerisation, die sich insbesondere zur Herstellung möglichst monodisperser Teilchen eignet, legt man die erfindungsgemäßen Kern der erfindungsgemäßen Kern-Schale-Partikel vor, wobei die Kerne eine möglichst homogene Teilchengrößenverteilung aufweisen. Die erfindungsgemäßen Kerne werden in diesem Fall als Saat-Latex bezeichnet. Zu der Saat-Latex wird mindestens ein ethylenisch ungesättigtes aromatisches Monomer langsam zudosiert. Die Polymerisation wird dabei so durchgeführt, dass die vorgelegten Latexteilchen unter Erhalt der Monodispersität des Systems volumenmäßig zunehmen, jedoch zahlenmäßig nicht anwachsen. Die Teilchenzahl ist dabei proportional zum Vorlageanteil, und man erhält enge Teilchen-Größenverteilungen.

In einer bevorzugten Ausführungsform der Erfindung weisen die erfindungsgemäßen Kern-Schale-Partikel einen mittleren Teilchendurchmesser von 30 nm bis 5000 nm, vorzugsweise von 100 bis 1000 nm und besonders bevorzugt von 400 bis 600 nm auf, wobei der mittlere Teilchendurchmesser wie oben definiert ist.

Die erfindungsgemäßen Kerne und/oder Schalen der erfindungsgemäßen Kern-Schale-Partikel bestehen entweder aus jeweils einer Schicht oder sind gegebenenfalls aus mehr als einer Schicht aufgebaut. Die jeweiligen Schichten bestehen dabei jeweils aus zumindest einem (Co)polymer zumindest eines ethylenisch-ungesättigten ggf. aromatischen Monomers, wobei die einzelnen Schichten des erfindungsgemäßen Kerns und/oder der erfindungsgemäßen Schalen vorzugsweise konzentrisch übereinander angeordnet sind.

Erfindungsgemäße Kerne und/oder Schalen mit mehr als einer Schicht können beispielsweise in einem mehrstufigen Verfahren aufgebaut werden. In einem ersten Schritt erfolgt dabei der Aufbau der ersten Schicht durch (Co)polymerisation eines ersten ethylenisch ungesättigten ggf. aromatischen Monomers oder einer Mischung verschiedener ethylenisch ungesättigten ggf. aromatischer Monomere. In einem zweiten Schritt erfolgt der Aufbau einer zweiten Schicht durch (Co)polymerisation eines zweiten ethylenisch ungesättigten ggf. aromatischen Monomers oder einer Mischung verschiedener ethylenisch ungesättigten ggf. aromatischer Monomere in Gegenwart der ersten Schicht, wobei die jeweiligen Schichten konzentrisch übereinander angeordnet sind.

In Analogie zum beschriebenen Aufbau der zweiten Schicht können ggf. auch weitere Schichten aufgebaut werden.

In einer bevorzugten Ausführungsform der Erfindung besteht der erfindungsgemäße Kern und/oder die erfindungsgemäße Schale der erfindungsgemäßen Kern-Schale-Partikel aus mehr als einer Schicht. In einer besonders bevorzugten Ausführungsform besteht nur die erfindungsgemäße Schale der erfindungsgemäßen Kern-Schale-Partikel aus mehr als einer Schicht.

Durch die verschiedenen Schichten können die physikalischen bzw. mechanischen Eigenschaften der Kern-Schale-Partikel in besonders vorteilhafter Weise an ein jeweiliges Aufgabenprofil angepasst werden. So ist es beispielsweise möglich, Kern-Schale-Partikel-aufzubauen, die aus mehreren Schichten unterschiedlicher (Co)polymere bestehen, wobei sich die genannten (Co)polymere beispielsweise in der Glasübergangstemperatur oder ihren mechanischen Daten unterscheiden, wodurch je nach verwendeter Benzoxazinmatrix eine besonders effektive Schlagzähmodifizierung erreicht wird.

In einer ganz besonders bevorzugten Ausführungsform der Erfindung enthält die äußerste Schicht der Schale der Kern-Schale-Partikel in polymerisierter Form ein ethylenisch ungesättigtes Monomer (B), das mindestens eine aromatische Gruppe umfasst.

Da die äußerste Schicht der Kern-Schale-Partikel in direktem Kontakt zur umgebenden Benzoxazin-Harzmatrix steht, weisen die genannten Kern-Schale-Partikel eine ganz besonders geringe Koagulationstendenz, insbesondere in N-Alkyl- und/oder N-Alkenyl-Benzoxazin-Verbindungen und deren Polymerisationsprodukten, auf.

In einer bevorzugten Ausführungsform der Erfindung liegt der Anteil der erfindungsgemäßen Kerne zwischen 50 und 95 Gew.-%, vorzugsweise zwischen 60 und 90 Gew.-% und insbesondere zwischen 70 und 85 Gew.-% und der Anteil der erfindungsgemäßen Schalen liegt in einer weiteren bevorzugten Ausführungsform der Erfindung zwischen 5 und 50 Gew.-%, vorzugsweise zwischen 10 und 40 Gew.-% und insbesondere zwischen 15 und 30 Gew.-%, jeweils bezogen auf die Gesamtmenge der Kern-Schale-Partikel.

In einer ebenfalls bevorzugten Ausführungsform der Erfindung enthält die erfindungsgemäße polymerisierbare Zusammensetzung die erfindungsgemäßen Kern-Schale-Partikel in Mengen von 0,001 bis 20 Gew.-%, vorzugsweise von 1 bis 15 Gew.-% und überaus bevorzugt von 5 bis 10 Gew.-%, jeweils bezogen auf die Gesamtmenge der polymerisierbaren Zusammensetzung.

In einer weiteren Ausführungsform der vorliegenden Erfindung besteht die polymerisierbare Zusammensetzung aus
- mindestens einer der oben genannten polymerisierbaren Benzoxazin-Verbindungen
- Kern-Schale-Partikeln der vorliegenden Erfindung, wobei der Kern der Kern-Schale-Partikel mindestens ein (Co)polymer mindestens eines ethylenisch ungesättigten Monomers (A) enthält und die Schale der Kern-Schale-Partikel mindestens ein vernetztes (Co)polymer mindestens eines ethylenisch ungesättigten Monomers (B) enthält, wobei das ethylenisch ungesättigte Monomer (B) mindestens eine aromatische Gruppe umfasst und
- gegebenenfalls einem oder mehreren Additiven, die ausgewählt werden aus Füllstoffen, Stabilisatoren, Härterbeschleunigern, Antioxidantien, Haftvermittlern, rheologische Agenzien, Verdickern, Bindemitteln, Lösungsmitteln, Radikalfängern, Katalysatoren, Reaktivverdünnern, Weichmachern, Flammschutz-Additiven, weitere Schlagzäh-Additive, Dispergiermitteln, Pigmenten, Farbstoffen, Emulgatoren (Tenside), Korrosionsinhibitoren.

Ein weiterer Gegenstand der vorliegenden Erfindung ist ein Verfahren zur Herstellung der erfindungsgemäßen Kern-Schale-Partikel, umfassend die Schritte:
a) Radikalische Miniemulsionspolymerisation mindestens eines ethylenisch ungesättigten Monomers (A) in Gegenwart eines Vernetzungsmittels zur Herstellung der Kerne;
b) Radikalische Polymerisation mindestens eines ethylenisch ungesättigten Monomers, in Gegenwart der in Schritt a) hergestellten Kerne und gegebenenfalls eines Vernetzungsmittels;
c) Abtrennung der in Schritt b) erhaltenen Kern-Schale-Partikel,
wobei Schritt a) und/oder Schritt b) vor der Ausführung des nachfolgenden Schritts beliebig oft wiederholt werden kann, mit der Maßgabe, dass die äußerste Schicht der Kern-Schale-Partikel durch radikalische Polymerisation mindestens eines ethylenisch ungesättigten Monomers (B), umfassend mindestens eine aromatische Gruppe, gebildet wird.

Unter dem mindestens einen ethylenisch ungesättigten Monomer (A) und dem mindestens einen ethylenisch ungesättigten Monomer (B) im erfindungsgemäßen Verfahren sind die bereits oben definierten Monomere zu verstehen.

Unter dem ethylenisch ungesättigten Monomer in Schritt b) des erfindungsgemäßen Verfahrens ist das erfindungsgemäße ethylenisch ungesättigte Monomer (A) und/oder das erfindungsgemäße ethylenisch ungesättigte Monomers (B) zu verstehen.

In Verfahrensschritt a) des erfindungsgemäßen Verfahrens erfolgt zunächst die Bereitstellung bzw. Herstellung der im erfindungsgemäßen Verfahren verwendeten Miniemulsion.

Die genaue Beschreibung der Miniemulsion, sowie deren Herstellung und deren Vorteile ist den oben getroffen Ausführungen zu entnehmen, auf die an dieser Stelle ausdrücklich verwiesen wird.

Die radikalischen Polymerisionsreaktionen in Schritt a) (Miniemulsionspolymerisation) und Schritt b) des erfindungsgemäßen Verfahrens werden vorzugsweise durch einen Polymerisationsstarter initiiert.

Die Menge an Polymerisationsstarter umfasst im Allgemeinen etwa 0,0001 % bis etwa 3,0%, insbesondere 0,001% bis 0,1% des Gesamtgewichts des Gemisches, das zur Herstellung des jeweiligen Polymers verwendet wird. Herkömmliche Polymerisationsstarter oder deren Mischungen (wie thermische Starter, Redox-Starter und dergleichen) sind geeignet für die Verwendung in der jeweiligen Polymerisationsreaktion. Beispiele für geeignete Starter umfassen die Folgenden: t-Butylhydroperoxid, Di-t-butylperoxid, Benzoylperoxid, Benzoylhydroperoxid, 2,4-Dichlorbenzoylperoxid, t-Butylperacetat, Natrium/Kalium/Ammoniumperoxodisulfat, Azoisobuttersaeuredinitril, Isopropylperoxycarbonat, Cumolhydroperoxid-Natriummetabisulfid, Cumolhydroperoxid-Eisen(II)sulfat und dergleichen. Bevorzugte Starter umfassen auch wasserlösliche Azoverbindungen.

Der Zugabe des Polymerisationsstarters erfolgt dabei vorzugsweise bei Temperaturen zwischen 40°C und 80°C.

Die Verwendung des Miniemulsionspolymerisationsprozesses zur Herstellung des Kern-(Co)polymers und damit auch der Kerne der erfindungsgemäßen Kern-Schale-Partikel ist von großem Vorteil, da zum einen durch die Kontrolle der Tröpfchengröße die Größe der Kerne der erfindungsgemäßen Kern-Schale-Partikel gesteuert werden kann.

Zum anderen erlaubt der Miniemulsionspolymerisationsprozess das problemlose Einbringen weiterer Additive in die Kerne, wobei die Additive vorzugsweise aus organischen und/oder anorganischen Materialien ausgewählt werden.

Die im Schritt c) vorgenommene Abtrennung der erhaltenen Kern-Schale-Partikel kann vorzugsweise durch Filtration und/oder Zentrifugation erfolgen.

Ebenfalls Gegenstand der vorliegenden Erfindung ist ein Verfahren zur Herstellung der erfindungsgemäßen polymerisierbaren Zusammensetzung, umfassend die Schritte:
a) Zugabe eines mit Wasser mischbaren organischen Lösungsmittels zu einer wässrigen Dispersion von erfindungsgemäßen Kern-Schale-Partikeln,
b) Zugabe einer Lösung mindestens einer erfindungsgemäßen polymerisierbaren Benzoxazin-Verbindung in einem mit Wasser mischbaren organischen Lösungsmittel und
c) Abtrennung von Wasser und des mit Wasser mischbaren organischen Lösungsmittels.

Geeignete mit Wasser mischbare organische Lösungsmittel sind im Sinne der vorliegenden Erfindung beispielsweise Alkohole, wie z. B. Methanol, Ethanol, Isopropanol, Propanol, tert.-Butanol, sec-Butanol, Isobutanol oder Glykol. Weitere vorteilhafte mit Wasser mischbare organische Lösungsmittel sind Ether, wie z. B. THF, 1,2-Dimethoxyethan, Diethylenglykol oder Dioxan.

Ein besonders geeignetes mit Wasser mischbares organisches Lösungsmittel ist THF.

Unter dem Begriff des "mit Wasser mischbaren organischen Lösungsmittels" sind auch Mischungen verschiedener mit Wasser mischbarer organischer Lösungsmittel zu verstehen.

Die in Verfahrensschritt c) genannte Abtrennung von Wasser und des mit Wasser mischbaren organischen Lösungsmittels erfolgt vorzugsweise durch Rotationsverdampfung bei reduziertem Druck.

Bei der Herstellung der polymerisierbaren Zusammensetzung nach dem oben beschrieben Verfahren tritt keine makroskopische Phasenseparation verschiedener nicht mischbarer Lösungsmittel auf. Dadurch kann auf den in herkömmlichen Verfahren anfallenden Schritt der Abtrennung einer Phase verzichtet werden, wobei in der Regel mit Wasser nicht-mischbare, oft umweltgefährdende, organische Lösungsmittel, wie etwa Methylisobutylketon, abgetrennt werden.

Ein weiterer Gegenstand der vorliegenden Erfindung ist das Polymerisationsprodukt der erfindungsgemäßen polymerisierbaren Zusammensetzung.

Die Polymerisation der polymerisierbaren Benzoxazin-Verbindung oder der Mischung verschiedener polymerisierbarer Benzoxazin-Verbindungen kann bei erhöhten Temperaturen nach einem selbstinitiierenden Mechanismus (thermische Polymerisation) oder durch Zugabe von kationischen Initiatoren erfolgen.

Geeignete kationische Initiatoren sind beispielsweise Lewissäuren oder andere kationische Initiatoren, wie beispielsweise Metallhalogenide, Organometall-Reagenzien, wie Metalloporphyrine, Methyltosylate, Methyltriflate oder Trifluorsulfonsäuren. Ebenso können basische Reagenzien verwendet werden, um die Polymerisation der polymerisierbaren Benzoxazin-Verbindung oder der Mischung verschiedener polymerisierbarer Benzoxazin-Verbindungen zu initiieren. Geeignete basische Reagenzien können beispielsweise ausgewählt werden aus Imidazol oder Imidazolderivaten.

Vorzugsweise erfolgt die thermische Polymerisation der erfindungsgemäßen polymerisierbaren Zusammensetzung bei Temperaturen von 150 bis 300°C, insbesondere bei Temperaturen von 160 bis 220°C. Durch die Verwendung der oben genannten Initiatoren und/oder reagenzien kann die Polymerisationstemperatur auch niedriger liegen.

In einer bevorzugten Ausführungsform der Erfindung umfasst das erfindungsgemäße Polymerisationsprodukt eine Schicht oder ein Bündel von Fasern, wobei die Fasern vor der Härtung (Polymerisation) mit der erfindungsgemäßen polymerisierbaren Zusammensetzung behandelt werden. Daher ist ein weiterer Gegenstand der vorliegenden Erfindung ein Verfahren zur Herstellung eines Polymerisationsprodukts der erfindungsgemäßen polymerisierbaren Zusammensetzung, wobei die genannte Zusammensetzung eine Schicht oder ein Bündel von Fasern umfasst und die Fasern vor der Härtung mit der erfindungsgemäßen polymerisierbaren Zusammensetzung behandelt werden.

Das erfindungsgemäße Verfahren umfasst die Schritte:
a) Bereitstellung einer Schicht oder eines Bündels von Fasern;
b) Bereitstellung der erfindungsgemäßen polymerisierbaren Zusammensetzung;
c) Erzeugung eines Verbundsystems durch Behandlung einer Schicht oder eines Bündels von Fasern mit der erfindungsgemäßen polymerisierbaren Zusammensetzung;
d) Gegebenenfalls Entfernung einer überschüssigen Menge der polymerisierbaren Zusammensetzung vom Verbundsystem,
wobei das genannte Polymerisationsprodukt erhalten wird, indem das Verbundsystem erhöhter Temperatur und erhöhtem Druck ausgesetzt wird.

Die genannten Fasern werden vorzugsweise ausgewählt aus Glasfasern, Kohlefasern, Aramidfasern, Borfasern, Aluminiumoxidfasern, Siliciumcarbidfasern. Es können zwei oder mehr dieser Fasern als Gemisch verwendet werden. Um ein Produkt mit geringerem Gewicht und höherer Haltbarkeit herzustellen, ist die Verwendung von Kohlefasern besonders bevorzugt.

Die Schicht oder das Bündel von Fasern sind im Sinne der vorliegenden Erfindung nicht auf eine bestimmte Form oder Anordnung festgelegt, und so können z. B. lange Fasern, die in eine Richtung parallel gelegt sind, Towgarne, Gewebe (Stoff), Matten, Strickgewebe, Borten verwendet werden.

Die nach dem genannten Verfahren hergestellten Verbundsysteme in Form von faserverstärkten Verbundwerkstoffen, insbesondere in Form von Prepregs oder Towpregs, können auf Grund ihres geringen Gewichts und der hohen strukturellen Festigkeit beispielsweise im Flugzeugbau oder der Automobilindustrie verwendet werden.

Ein weiterer Gegenstand der vorliegenden Erfindung ist ein Klebstoff, Dichtstoff oder Beschichtung, umfassend die erfindungsgemäße polymerisierbare Zusammensetzung.

Ebenfalls Gegenstand der vorliegenden Erfindung ist die Verwendung der erfindungsgemäßen Kern-Schale-Partikel zur Schlagzähmodifizierung eines Polymerisationsproduktes, enthaltend in polymerisierter Form zumindest eine der oben beschriebenen polymerisierbaren Benzoxazin-Verbindungen.

N-Alkyl- oder N-Alkenyl-Benzoxazin-Verbindungen sind besonders bevorzugt, da die erfindungsgemäßen Kern-Schale-Partikel eine besonders leichte Formulierbarkeit und gute Kompatibilität mit den genannten Benzoxazin-Verbindungen aufweisen.

Die erfindungsgemäßen Kern-Schale-Partikel liegen in den Polymerisationsprodukten, insbesondere der N-Alkyl- oder N-Alkenyl-Benzoxazin-Verbindungen im Wesentlichen homogen verteilt vor und zeigen eine sehr geringe Koagulationstendenz. Auf diese Weise wird eine besonders effektive Schlagzähmodifizierung der genannten Benzoxazine erreicht.

### Ausführungsbeispiele

### 1. Herstellung der Kern-Schale-Partikel

### 1.1 Herstellung der Kerne

Verwendete Reagenzien:

| | |
|---|---|
| Butylacrylat | Acros 99%, CAS 141-32-2 |
| Ammoniumlaurylsulfat | Disponil ALS 33, 33% in Wasser Cognis |
| Tripropylenglykoldiacrylat | Laromer TPGDA, BASF SE |
| Kaliumperoxodisulfat | Merck |

In einem Becherglas wird eine Mischung von 0,92 g Disponil ALS 33 in 241 g Wasser durch schnelles Rühren homogenisiert. Zu dieser Mischung wird eine Mischung von 60,20 g Butylacrylat und 0,061 g Tripropylenglykoldiacrylat in 4,02 g Wasser gegeben und die erhaltene Mischung unter starkem Rühren homogenisiert. Die homogenisierte Mischung wird mit einem Microfluidizer der Fa. Microfluidics mit 4-mal 8000psi zur Herstellung der Miniemulsion behandelt.

In die resultierende Mischung wird über 25 min bei Raumtemperatur ein N₂-Strom geleitet. Anschließend wird auf 75°C erwärmt und 0,063 g Kaliumperoxodisulfat in 2,21 g Wasser zugegeben. Nach 4,5h Rühren bei Raumtemperatur wird die Reaktion beendet und die Reaktionsmischung auf 40°C abgekühlt und filtriert, wobei alle Partikel mit einer Teilchengröße > 80 µm entfernt werden.

Der gravimetrisch bestimmte Feststoffgehalt der resultierenden Lösung beträgt 13,4%. Durch dynamische Lichtstreuung, bestimmt mit einem Microtrac UPA 250, wird eine mittlere Teilchengröße (D 50 Volumenmittel) der erhaltenen Kerne von 115 nm ermittelt.

### 1.2 Herstellung der Kern-Schale-Partikel

### 1.2.1 Herstellung der Kern-Schale-Partikel#1

### Verwendete Reagenzien:

### Reaktionsaustrag 1.1

| | |
|---|---|
| Benzylmethacrylat | Acros 96%, CAS 2495-37-6 |
| Tripropylenglykoldiacrylat | Laromer TPGDA, BASF SE |
| Ammoniumperoxodisulfat | Merck |

200 g des in 1.1 erhaltenen Reaktionsaustrages werden bei Raumtemperatur mit 25,3 g Benzylmethacrylat und 0,7 g Tripropylenglykoldiacrylat versetzt. Unter einer N₂-Atmosphäre wird 20 h bei Raumtemperatur gerührt. Anschließend erwärmt man die Reaktionsmischung auf 55°C und gibt 0,8 g Ammoniumperoxodisulfat zu. Nach 30 min Rühren bei 65°C wird die Reaktion beendet, die Reaktionsmischung auf 40°C abgekühlt und filtriert, wobei alle Partikel mit einer Teilchengröße > 80 µm entfernt werden.

Durch dynamische Lichtstreuung, bestimmt mit einem Microtrac UPA 250, wird eine mittlere Teilchengröße (D 50 Volumenmittel) der erhaltenen Kern-Schale-Partikel#1 von 544 nm ermittelt.

### 1.2.2 Herstellung der Kern-Schale-Partikel#2

### Verwendete Reagenzien:

### Reaktionsaustrag 1.1

| | |
|---|---|
| Benzylmethacrylat | Acros 96%, CAS 2495-37-6 |
| Styrol | Acros 99%, CAS 100-42-5 |
| Tripropylenglykoldiacrylat | Laromer TPGDA, BASF SE |
| Ammoniumperoxodisulfat | Merck |

140 g des in 1.1 erhaltenen Reaktionsaustrages werden bei Raumtemperatur mit 15,0 g Benzylmethacrylat und 0,5 g Tripropylenglykoldiacrylat versetzt. Unter einer N₂-Atmosphäre wird 20 h bei Raumtemperatur gerührt. Anschließend erwärmt man die Reaktionsmischung auf 55°C und gibt 0,6 g Ammoniumperoxodisulfat zu. Nach 30 min Rühren bei 65°C wird die Reaktion beendet, die Reaktionsmischung auf 40°C abgekühlt und filtriert, wobei alle Partikel mit einer Teilchengröße > 80 µm entfernt werden.

Durch dynamische Lichtstreuung, bestimmt mit einem Microtrac UPA 250, wird eine mittlere Teilchengröße (D 50 Volumenmittel) der erhaltenen Kern-Schale-Partikel#2 von 525 nm ermittelt.

### 1.3 Herstellung der polymerisierbaren Zusammensetzung

Zur Herstellung der polymerisierbaren Zusammensetzung werden die in 1.2 erhaltenen wässrigen Lösungen der Kern-Schale-Partikel mit THF versetzt, so dass vorzugsweise ein 1:1 bis 1:4 Wasser:THF-Mischung entsteht. Anschließend wird unter Rühren mindestens eine polymerisierbare Benzoxazin-Verbindung zugegeben. Die resultierende Mischung wird unter reduziertem Druck von allen flüchtigen Bestandteilen (z.B. Wasser) befreit und anschließend entgast. Bei der Herstellung der polymerisierbaren Zusammensetzung nach dem oben beschrieben Verfahren tritt keine makroskopische Phasenseparation verschiedener nicht mischbarer Lösungsmittel auf. Dadurch kann auf den in herkömmlichen Verfahren anfallenden Schritt der Abtrennung einer Phase verzichtet werden, wobei in der Regel mit Wasser nicht-mischbare, oft umweltgefährdende, organische Lösungsmittel, wie etwa Methylisobutylketon, abgetrennt werden (s. beispielsweise EP 1623533 A1).

Das beschriebene Herstellungsverfahren ist daher vor allem unter Effizienz- sowie Umweltgesichtspunkten vorteilhaft.

Bei der Herstellung der polymerisierbaren Zusammensetzung wurde die Menge der wässrigen Lösung der Kern-Schale-Partikel jeweils so gewählt, dass der gewünschte Anteil der Kern-Schale-Partikel in der polymerisierbaren Zusammensetzung nach Entfernung aller flüchtigen Bestandteile erhalten wird.

Als polymerisierbare Benzoxazin-Verbindungen wurden folgende N-Alkyl-Benzoxazin-Verbindung und N-Alkenyl-Benzoxazin-Verbindung verwendet:

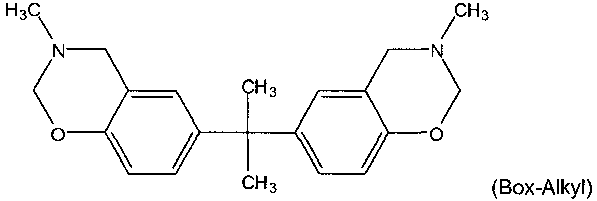

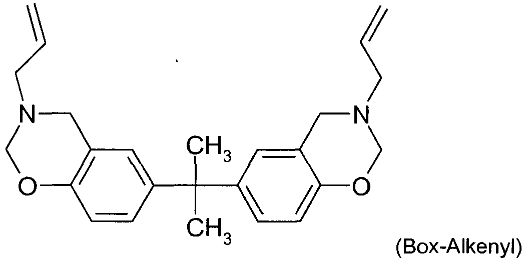

Nach dem oben beschriebenen Verfahren wurden die in Tabelle 1 aufgeführten polymerisierbaren Zusammensetzungen hergestellt

**Tabelle 1: Polymerisierbare Zusammensetzungen, umfassend Benzoxazin-Verbindungen und Kern-Schale-Partikel**

| Zusammensetzung Gew.-% | Box-Alkyl | Box-Alkenyl | Kern-Schale-Partikel#1 | Kern- 1 Schale-Partikel#2 |
|---|---|---|---|---|
| Probe 1 (Referenz) | 100 | - | - | - |
| Probe 2 | 95 | - | 5 | - |
| Probe 3 (Referenz) | - | 100 | - | - |
| Probe 4 | - | 95 | - | 5 |

### 1.4 Mechanische Daten der gehärteten polymerisierbaren Zusammensetzung

Die polymerisierbaren Zusammensetzungen wurden in einem Trockenschrank mit Luftzirkulation in Formkörpern bei 180°C innerhalb von 3 h thermisch ausgehärtet. Anschließend wurden die Proben aus den Formkörpern entnommen und auf Raumtemperatur abgekühlt.

Die Proben wurden mit den folgenden analytischen Methoden charakterisiert.

Die Glasübergangstemperaturen wurden durch Dynamisch-Mechanische Thermo-Analyse (DMTA) von Probenkörper der Größe 35 mm x 10 mm x 3.2 mm bestimmt. Die Proben wurden dabei von 25°C mit einer Heizrate von 10 °C/min bis zur Endtemperatur von 250°C erwärmt. Die jeweilige Glasübergangstemperatur wurde aus dem Maximalwert des Verlustmoduls vs. Temperatur Diagramm erhalten.

Die Biegefestigkeit (flexural strength) and das Biegemodul (flexural modulus) wurden gemäß ASTM D790 bestimmt, wobei jeweils ein Probenkörper der Größe 90 mm x 12.7 mm x 3.2 mm, span = 50.8 mm und eine Geschwindigkeit = 1.27 mm/min benutzt wurde.

Der kritische Spannungsintensitätsfaktor K1c wurde gemäß ASTM D5045-96 unter Verwendung des sogenannten "single etch notch bending (SENB)" bestimmt, wobei jeweils ein Probenkörper der Größe 56 mm x 12.7 mm x 3.2 mm verwendet wurden.

Die mechanischen Daten der gehärteten polymerisierbaren Zusammensetzungen sind in Tabelle 2 dargestellt.

**Tabelle 2: Mechanische Daten der polymerisierbaren Zusammensetzungen**

| Probe → | 1 (Ref.) | 2 | 3 (Ref.) | 4 |
|---|---|---|---|---|
| Daten ↓ | | | | |
| DMTA-Tg (E') [°C] | 187 | 178 | 190 | 197 |
| Biegefestigkeit [MPa] | 100 | 100 | 85 | 100 |
| Biegemodul [MPa] | 4200 | 4125 | 3675 | 3615 |
| K1c [MPa m^{0.5}] | 0,85 | 1,02 | 0,61 | 0,70 |

Die mechanischen Daten der gehärteten polymerisierbaren Zusammensetzungen zeigen, dass sowohl bei N-Alkyl-Benzoxazinen als auch bei N-Alkenyl-Benzoxazinen durch die Verwendung der erfindungsgemäßen Kern-Schale-Partikel eine effektive Schlagzähmodifizierung erreicht werden kann. Bemerkenswert ist, dass dabei die Glasübergangstemperatur, die Biegefestigkeit und das Biegemodul der gehärteten Zusammensetzungen nahezu konstant bleiben.

Eine vergleichbare Schlagzähmodifizierung wird nicht erreicht, wenn Kern-Schate-Partikel verwendet werden, in denen die Schale, insbesondere die äußerste Schicht der Schale, nicht mindestens ein (Co)polymer umfasst, das von mindestens einem ethylenisch ungesättigten Monomer gebildet wird, das mindestens eine aromatische Gruppe umfasst.

## Patentansprüche

1. Polymerisierbare Zusammensetzung, enthaltend
a) mindestens eine polymerisierbare Benzoxazin-Verbindung und
b) Kern-Schale-Partikel, wobei der Kern der Kern-Schale-Partikel mindestens ein (Co)polymer mindestens eines ethylenisch ungesättigten Monomers (A) enthält und die Schale der Kern-Schale-Partikel mindestens ein vernetztes (Co)polymer mindestens eines ethylenisch ungesättigten Monomers (B) enthält, wobei das ethylenisch ungesättigte Monomer (B) mindestens eine aromatische Gruppe umfasst.

2. Polymerisierbare Zusammensetzung nach Anspruch 1, **dadurch gekennzeichnet, dass** die Benzoxazin-Verbindung ausgewählt wird aus N-Alkyl-oder N-Alkenyl-Benzoxazin-Verbindungen oder aus deren Mischungen.

3. Polymerisierbare Zusammensetzung nach mindestens einem der Ansprüche 1 bis 2, **dadurch gekennzeichnet, dass** das ethylenisch ungesättigte Monomer (A) aus ethylenisch einfach ungesättigten Monomeren ausgewählt wird.

4. Polymerisierbare Zusammensetzung nach mindestens einem der Ansprüche 1 bis 3, **dadurch gekennzeichnet, dass** der Kern der Kern-Schale-Partikel mindestens ein (Co)polymer enthält, das durch radikalische Miniemulsionspolymerisation mindestens eines ethylenisch ungesättigten Monomers (A) gegebenenfalls in Gegenwart eines Vernetzungsmittels hergestellt wird.

5. Polymerisierbare Zusammensetzung nach mindestens einem der Ansprüche 1 bis 4, **dadurch gekennzeichnet, dass** das ethylenisch ungesättigte Monomer (B) ausgewählt wird aus vinyl-aromatischen Verbindungen oder aus aromatischen Estern von (Meth)acrylsäuren.

6. Polymerisierbare Zusammensetzung nach mindestens einem der Ansprüche 1 bis 5, **dadurch gekennzeichnet, dass** die Schale der Kern-Schale-Partikel mindestens ein vernetztes (Co)polymer enthält, das durch Polymerisation mindestens eines ethylenisch ungesättigten Monomers (B), umfassend eine aromatische Gruppe, in Gegenwart mindestens eines Vernetzungsmittels hergestellt wird.

7. Polymerisierbare Zusammensetzung nach mindestens einem der Ansprüche 1 bis 6, **dadurch gekennzeichnet, dass** der Kern und/oder die Schale der Kern-Schale-Partikel aus mehr als einer Schicht besteht.

8. Polymerisierbare Zusammensetzung nach mindestens einem der Ansprüche 1 bis 7, **dadurch gekennzeichnet, dass** jeweils bezogen auf die Gesamtmenge der Kern-Schale-Partikel der Anteil der Kerne zwischen 50 und 95 Gew.-% und der der Anteil der Schalen zwischen 5 und 50 Gew.-% liegt.

9. Polymerisierbare Zusammensetzung nach mindestens einem der Ansprüche 1 bis 8, **dadurch gekennzeichnet, dass** die polymerisierbare Zusammensetzung die Kern-Schale-Partikel in Mengen von 0,001 bis 20 Gew.-%, vorzugsweise von 1 bis 15 Gew.-% und überaus bevorzugt von 5 bis 10 Gew.-%, jeweils bezogen auf die Gesamtmenge der polymerisierbaren Zusammensetzung, enthält.

10. Verfahren zur Herstellung einer polymerisierbaren Zusammensetzung nach mindestens einem der Ansprüche 1 bis 9, umfassend die Schritte:
a) Zugabe eines mit Wasser mischbaren organischen Lösungsmittels zu einer wässrigen Dispersion von Kern-Schale-Partikeln,
b) Zugabe einer Lösung mindestens einer polymerisierbaren Benzoxazin-Verbindung in einem mit Wasser mischbaren organischen Lösungsmittel und
c) Abtrennung von Wasser und des mit Wasser mischbaren organischen Lösungsmittels.

11. Polymerisationsprodukt der polymerisierbaren Zusammensetzung nach mindestens einem der Ansprüche 1 bis 9.

12. Polymerisations produkt nach Anspruch 11, **dadurch gekennzeichnet, dass** das genannte Polymerisationsprodukt eine Schicht oder ein Bündel von Fasern umfasst, wobei die Fasern vor der Härtung mit einer polymerisierbaren Zusammensetzung nach mindestens einem der Ansprüche 1 bis 9 behandelt werden.

13. Verfahren zur Herstellung eines Polymerisationsproduktes nach Anspruch 12, umfassend die Schritte:
a) Bereitstellung einer Schicht oder eines Bündels von Fasern;
b) Bereitstellung einer polymerisierbaren Zusammensetzung nach mindestens einem der Ansprüche 1 bis 9;
c) Erzeugung eines Verbundsystems durch Behandlung einer Schicht oder eines Bündels von Fasern mit der polymerisierbaren Zusammensetzung;
d) Gegebenenfalls Entfernung einer überschüssigen Menge der polymerisierbaren Zusammensetzung vom Verbundsystem,
wobei das genannte Polymerisationsprodukt erhalten wird, indem das Verbundsystem erhöhter Temperatur und erhöhtem Druck ausgesetzt wird.

14. Klebstoff, Dichtstoff oder Beschichtung, umfassend eine polymerisierbare Zusammensetzung nach mindestens einem der Ansprüche 1 bis 9.

15. Verwendung von Kern-Schale-Partikeln, die Bestandteil einer polymerisierbaren Zusammensetzung nach mindestens einem der Ansprüche 1 bis 9 sind zur Schlagzähmodifizierung eines Polymerisationsproduktes, enthaltend in polymerisierter Form zumindest eine polymerisierbare Benzoxazin-Verbindung.

## Claims

1. A polymerizable composition containing
a) at least one polymerizable benzoxazine compound and
b) core-shell particles, wherein the core of the core-shell particles contains at least one (co)polymer of at least one ethylenically unsaturated monomer (A) and the shell of the core-shell particles contains at least one crosslinked (co)polymer of at least one ethylenically unsaturated monomer (B), wherein the ethylenically unsaturated monomer (B) comprises at least one aromatic group.

2. The polymerizable composition according to Claim 1, **characterized in that** the benzoxazine compound is selected from N-alkyl- or N-alkenylbenzoxazine compounds or from mixtures thereof.

3. The polymerizable composition according to at least one of Claims 1 to 2, **characterized in that** the ethylenically unsaturated monomer (A) is selected from ethylenically monounsaturated monomers.

4. The polymerizable composition according to at least one of Claims 1 to 3, **characterized in that** the core of the core-shell particles contains at least one (co)polymer that is produced by radical mini-emulsion polymerization of at least one ethylenically unsaturated monomer (A), optionally in the presence of a crosslinking agent.

5. The polymerizable composition according to at least one of Claims 1 to 4, **characterized in that** the ethylenically unsaturated monomer (B) is selected from vinyl aromatic compounds or from aromatic esters of (meth)acrylic acids.

6. The polymerizable composition according to at least one of Claims 1 to 5, **characterized in that** the shell of the core-shell particles contains at least one crosslinked (co)polymer that is produced by polymerization of at least one ethylenically unsaturated monomer (B) comprising an aromatic group, in the presence of at least one crosslinking agent.

7. The polymerizable composition according to at least one of Claims 1 to 6, **characterized in that** the core and/or the shell of the core-shell particles is made up of more than one layer.

8. The polymerizable composition according to at least one of Claims 1 to 7, **characterized in that** based in each case on the total quantity of core-shell particles, the proportion of cores is between 50 and 95 wt% and the proportion of shells is between 5 and 50 wt%.

9. The polymerizable composition according to at least one of Claims 1 to 8, **characterized in that** the polymerizable composition contains the core-shell particles in quantities from 0.001 to 20 wt%, preferably from 1 to 15 wt% and particularly preferably from 5 to 10 wt%, based in each case on the total quantity of polymerizable composition.

10. A method for manufacturing a polymerizable composition according to at least one of Claims 1 to 9, comprising the steps of:
a) adding an organic solvent miscible with water to an aqueous dispersion of core-shell particles,
b) adding a solution of at least one polymerizable benzoxazine compound to an organic solvent miscible with water, and
c) separating the water and the organic solvent miscible with water.

11. A polymerization product of the polymerizable component according to at least one of Claims 1 to 9.

12. The polymerization product according to Claim 11, **characterized in that** said polymerization product comprises a layer or bundle of fibers, wherein the fibers are treated before curing with a polymerizable composition according to at least one of Claims 1 to 9.

13. A method for producing a polymerization product according to Claim 12, comprising the steps of:
a) supplying a layer or bundle of fibers;
b) supplying a polymerizable composition according to at least one of Claims 1 to 9;
c) generating a composite system by treating a layer or bundle of fibers with the polymerizable composition;
d) optionally, removing an excess quantity of the polymerizable composition from the composite system,
wherein the aforesaid polymerization product is obtained by exposing the composite system to elevated temperature and elevated pressure.

14. An adhesive, sealant or coating comprising a polymerizable composition according to at least one of Claims 1 to 9.

15. Use of core-shell particles that are a constituent of a polymerizable composition according to at least one of Claims 1 to 9 for impact modification of a polymerization product containing at least one polymerizable benzoxazine compound in polymerized form.

## Revendications

1. Composition polymérisable, contenant
a) au moins un composé polymérisable de benzoxazine et
b) des particules à noyau-coquille, le noyau des particules à noyau-coquille contenant au moins un (co)polymère d'au moins un monomère éthyléniquement insaturé (A) et la coquille des particules à noyau-coquille contenant au moins un (co)polymère réticulé d'au moins un monomère éthyléniquement insaturé (B), le monomère éthyléniquement insaturé (B) contenant au moins un groupe aromatique.

2. Composition polymérisable selon la revendication 1, **caractérisée en ce que** le composé de benzoxazine est choisi parmi les composés de N-alkyl-benzoxazine ou de N-alcényl-benzoxazine ou parmi leurs mélanges.

3. Composition polymérisable selon au moins l'une quelconque des revendications 1 à 2, **caractérisée en ce que** le monomère éthyléniquement insaturé (A) est choisi parmi les monomères éthyléniquement monoinsaturés.

4. Composition polymérisable selon au moins l'une quelconque des revendications 1 à 3, **caractérisée en ce que** le noyau des particules à noyau-coquille contient au moins un (co)polymère qui est préparé par polymérisation en miniémulsion par voie radicalaire d'au moins un monomère éthyléniquement insaturé (A), le cas échéant en présence d'un agent réticulant.

5. Composition polymérisable selon au moins l'une quelconque des revendications 1 à 4, **caractérisée en ce que** le monomère éthyléniquement insaturé (B) est choisi parmi les composés vinylaromatiques ou les esters aromatiques d'acides (méth)acryliques.

6. Composition polymérisable selon au moins l'une quelconque des revendications 1 à 5, **caractérisée en ce que** la coquille des particules à noyau-coquille contient au moins un (co)polymère réticulé, qui est préparé par polymérisation d'au moins un monomère éthyléniquement insaturé (B) comprenant un groupe aromatique, en présence d'au moins un réticulant.

7. Composition polymérisable selon au moins l'une quelconque des revendications 1 à 6, **caractérisée en ce que** le noyau et/ou la coquille des particules à noyau-coquille est constitué(e) par plus d'une couche.

8. Composition polymérisable selon au moins l'une quelconque des revendications 1 à 7, **caractérisée en ce que**, à chaque fois par rapport à la quantité totale des particules à noyau-coquille, la proportion des noyaux se situe entre 50 et 95 % en poids et la proportion des coquilles se situe entre 5 et 50 % en poids.

9. Composition polymérisable selon au moins l'une quelconque des revendications 1 à 8, **caractérisée en ce que** la composition polymérisable contient les particules à noyau-coquille en des quantités de 0,001 à 20 % en poids, de préférence de 1 à 15 % en poids et plus préférablement 5 à 10 % en poids, à chaque fois par rapport à la quantité totale de la composition polymérisable.

10. Procédé pour la préparation d'une composition polymérisable selon au moins l'une quelconque des revendications 1 à 9, comprenant les étapes :
a) addition d'un solvant organique miscible à l'eau à une dispersion aqueuse de particules à noyau-coquille,
b) addition d'une solution d'au moins un composé de benzoxazine polymérisable dans un solvant organique miscible à l'eau et
c) séparation de l'eau et du solvant organique miscible à l'eau.

11. Produit de polymérisation de la composition polymérisable selon au moins l'une quelconque des revendications 1 à 9.

12. Produit de polymérisation selon la revendication 11, **caractérisé en ce que** le produit de polymérisation comprend une couche ou un faisceau de fibres, les fibres étant traitées avant le durcissement par une composition polymérisable selon au moins l'une quelconque des revendications 1 à 9.

13. Procédé pour la préparation d'un produit de polymérisation selon la revendication 12, comprenant les étapes :
a) mise à disposition d'une couche ou d'un faisceau de fibres ;
b) mise à disposition d'une composition polymérisable selon au moins l'une quelconque des revendications 1 à 9 ;
c) production d'un système composite par traitement d'une couche ou d'un faisceau de fibres par la composition polymérisable ;
d) le cas échéant élimination d'une quantité en excès de la composition polymérisable du système composite,
le produit de polymérisation mentionné étant obtenu en ce que le système composite est soumis à une température augmentée et une pression augmentée.

14. Adhésif, agent d'étanchéité ou revêtement, comprenant une composition polymérisable selon au moins l'une quelconque des revendications 1 à 9.

15. Utilisation de particules à noyau-coquille qui font partie d'une composition polymérisable selon au moins l'une quelconque des revendications 1 à 9 pour la modification de la résilience d'un produit de polymérisation, contenant au moins un composé de benzoxazine polymérisable sous forme polymérisée.
